# EUROPEAN PATENT APPLICATION

(11) **EP 4 528 474 A1**
(43) Date of publication of application: **26.03.2025**
(21) Application number: 23825859.4
(22) Date of filing: 20.03.2023
(51) Int. Cl.: G06F 3/14, G06T 7/11, H04N 5/268

(54) **SCREEN MIRRORING METHOD AND RELATED DEVICE**

(30) Priority: 20.06.2022 CN 202210699306; 06.09.2022 CN 202211084380
(71) Applicant: Huawei Technologies Co., Ltd., Shenzhen, Guangdong 518129 (CN)
(72) Inventor: WANG, Peixin, Shenzhen, Guangdong 518129 (CN); ZHANG, Lei, Shenzhen, Guangdong 518129 (CN); BAI, Zhongjia, Shenzhen, Guangdong 518129 (CN); LIU, Linlin, Shenzhen, Guangdong 518129 (CN)
(74) Representative: Gill Jennings & Every LLP
(86) International application number: PCT/CN2023/082418
(87) International publication number: WO 2023/246201

(57) **Abstract**

This application discloses a projection method, applied to the field of projection display. In the projection method, a to-be-projected image sent by a projection terminal is segmented to obtain a plurality of subimages obtained after segmentation, where heights of the plurality of subimages each are less than a height of the to-be-projected image. In this way, the plurality of subimages are displayed side by side on a target display. This can increase an area of the display that effectively displays projection content and ensure a display effect of the projection content on the basis of ensuring integrity of the projection content.

## Description

### TECHNICAL FIELD

This application relates to the field of computer technologies, and in particular, to a projection method and a related apparatus.

### BACKGROUND

Currently, with rapid popularization of mobile terminals and large-screen terminals, projection has become one of many requirements of users. The user may transmit, based on a projection technology in a wireless or wired manner, content displayed on the mobile terminal to a large screen for display. The mobile terminal is usually referred to as a projection terminal, and a terminal on which the large screen is located is referred to as a display terminal. For example, when using a small-screen projection terminal for office work, game playing, orvideo watching, the user may use a projection function to project content displayed on the projection terminal onto the large screen of the display terminal, for improving a viewing effect.

In a current projection technology, when to-be-projected content is projected onto the display terminal, a problem of a small proportion of an effective projection area usually exists. To be specific, a large quantity of blank regions in which no projection content is displayed appears on the large screen of the display terminal. Consequently, a display region on the large screen of the display terminal cannot be fully used, and a display effect of projection content is poor.

### SUMMARY

This application provides a projection method, to obtain a plurality of subimages based on a to-be-projected image sent by a projection terminal, where heights of the plurality of subimages are all less than a height of the to-be-projected image. In this way, the plurality of subimages are displayed side by side on a target display. This can increase an area of the display that effectively displays projection content and ensure a display effect of the projection content on the basis of ensuring integrity of the projection content.

According to a first aspect, this application provides a projection method, applied to a first electronic device. The method includes: The first electronic device obtains a first image, where the first image is an image to be projected onto a target display for display. Content of the first image is vertically typeset content, for example, a vertically typeset document. Therefore, a width of the first image is less than a height of the first image. In addition, a width of the target display is greater than a height of the target display.

The first electronic device obtains at least two subimages based on the first image, where the at least two subimages are displayed side by side on the target display. The content of the first image can be obtained from content of the at least two subimages, and a height of any one of the at least two subimages is less than the height of the first image. In other words, all the content of the at least two subimages is the same as the content of the first image. After the first image is segmented into the at least two subimages, the content of the first image is not lost.

That the at least two subimages are displayed side by side on the target display may mean that the at least two subimages are horizontally and/or vertically displayed side by side on the same target display. For example, the at least two subimages are displayed side by side on the same target display in an order from left to right (namely, horizontally). For another example, the at least two subimages include four subimages, first two subimages are horizontally displayed side by side in an upper half region of the target display, and last two subimages are horizontally displayed side by side in a lower half region of the same target display. In other words, the first two subimages and the last two subimages are vertically displayed side by side.

In this solution, when a to-be-projected image whose width is less than the height is obtained, a plurality of subimages are obtained based on the to-be-projected image. All content of the plurality of subimages is the same as content of the to-be-projected image, and heights of the plurality of subimages are all less than the height of the to-be-projected image. In this way, the plurality of subimages are obtained based on the to-be-projected image, so that the heights of the obtained subimages can be effectively reduced, and then sizes of the plurality of subimages displayed side by side on a display are more coordinated with a size of the display. In addition to ensuring integrity of projection content, an area of the display that effectively displays the projection content is increased, and a display effect of the projection content is ensured.

In a possible implementation of the first aspect, the target display is connected to a second electronic device. The first electronic device sends a second image to the second electronic device, where the second image includes the at least two subimages arranged side by side. In this way, after receiving the second image, the second electronic device can output the second image to the target display for display, so that the target display can display the at least two subimages obtained from the first image.

In this solution, the first electronic device converts the to-be-projected first image into the second image including the plurality of subimages arranged side by side, and sends the second image to the second electronic device connected to the target display, so that the second electronic device can output the second image to the target display for display without processing the second image. In this way, when an electronic device connected to the target display is a device with a weak processing capability, implementability of this solution can also be ensured.

Alternatively, the first electronic device sends the at least two subimages to the second electronic device. After receiving the at least two subimages, the second electronic device displays the at least two subimages side by side on the target display.

For example, the first electronic device may be a server or a smartphone, the second electronic device may be a personal computer, and the second electronic device is connected to the target display.

In a possible implementation of the first aspect, the target display is connected to the first electronic device. The first electronic device outputs a second image to the target display for display, where the second image includes the at least two subimages arranged side by side.

For example, the first electronic device may be a personal computer, and the first electronic device is connected to the target display.

In a possible implementation of the first aspect, the first electronic device includes the target display, and the first electronic device displays the at least two subimages side by side via the target display.

For example, the first electronic device may be a smart television, and the target display is deployed on the first electronic device.

According to a second aspect, this application provides a projection method, including: A first electronic device obtains a first image, where the first image is an image to be projected onto a target display for display, a width of the first image is less than a height of the first image, and a width of the target display is greater than a height of the target display. The first electronic device obtains at least two subimages based on the first image, where some of the at least two subimages are displayed on the target display, content of the first image can be obtained from content of the at least two subimages, and a height of any one of the at least two subimages is less than the height of the first image.

For example, the at least two subimages include a first subimage and a second subimage. When the first subimage is displayed on the target display, the second subimage is not displayed on the target display simultaneously with the first subimage. In other words, only some rather than all of the at least two subimages can be simultaneously displayed on the target display. Because the height of any one of the subimages is less than the height of the first image, some of the subimages are displayed on the target display whose width is greater than the height. This can increase an area of a display that effectively displays projection content and ensure a display effect of the projection content.

In this solution, when a to-be-projected image whose width is less than the height is obtained, a plurality of subimages are obtained based on the to-be-projected image. All content of the plurality of subimages is the same as content of the to-be-projected image, and heights of the plurality of subimages are all less than the height of the to-be-projected image. The plurality of subimages are obtained based on the to-be-projected image, so that the heights of the obtained subimages can be effectively reduced. In this way, some subimages are displayed side by side on the display, so that sizes of the subimages can be more coordinated with a size of the display. In addition to ensuring the integrity of the projection content, the area of the display that effectively displays the projection content is increased, and the display effect of the projection content is ensured.

According to a third aspect, this application provides a projection method, including: A first electronic device obtains a first image, where the first image is an image to be projected onto a target display for display, a width of the first image is less than a height of the first image, and the target display includes at least two sub-displays. The first electronic device obtains at least two subimages based on the first image, where the at least two subimages are separately displayed on the at least two sub-displays, content of the first image can be obtained from content of the at least two subimages, and a height of any one of the at least two subimages is less than the height of the first image.

The at least two subimages may be in a one-to-one correspondence with the at least two sub-displays. In this way, each of the at least two subimages is displayed on a different sub-display. For example, it is assumed that the at least two subimages include a first subimage and a second subimage, and the at least two sub-displays include a first sub-display and a second sub-display. In this case, the first subimage is displayed on the first sub-display, and the second subimage is displayed on the second sub-display.

Alternatively, a sub-display in the at least two sub-displays may display one or more subimages. For example, it is assumed that the at least two subimages include a first subimage, a second subimage, and a third subimage, and the at least two sub-displays include a first sub-display and a second sub-display, the first subimage may be displayed on the first sub-display, and the second subimage and the third subimage are displayed on the second sub-display.

In this solution, when a to-be-projected image whose width is less than the height is obtained, a plurality of subimages are obtained based on the to-be-projected image. All content of the plurality of subimages is the same as content of the to-be-projected image, and heights of the plurality of subimages are all less than the height of the to-be-projected image. The plurality of subimages are obtained based on the to-be-projected image, so that the heights of the obtained subimages can be effectively reduced. In this way, the plurality of subimages are separately displayed on a plurality of displays, so that sizes of the subimages can be more coordinated with sizes of the displays. In addition to ensuring integrity of projection content, areas of the displays that effectively display the projection content are increased, and a display effect of the projection content is ensured.

In a possible implementation of the first aspect, the second aspect, or the third aspect, the target display is connected to a second electronic device, and the first electronic device further sends the at least two subimages to the second electronic device, so that the second electronic device can output the at least two subimages to the target display.

In this solution, the first electronic device converts the to-be-projected first image into the second image including the plurality of subimages, and sends the second image to the second electronic device connected to the target display, so that the second electronic device can output the received plurality of subimages to the target display for display without processing the received image. In this way, when an electronic device connected to the target display is a device with a weak processing capability, implementability of this solution can also be ensured.

In a possible implementation of the third aspect, the target display is connected to the first electronic device. The first electronic device separately outputs the at least two subimages to the at least two sub-displays for display.

In a possible implementation of the third aspect, the at least two subimages include the first subimage and the second subimage, the at least two sub-displays include the first sub-display and the second sub-display, the first electronic device includes the first sub-display, and the first electronic device is connected to the second sub-display. In this case, the first electronic device displays the first subimage via the first sub-display, and outputs the second subimage to the second sub-display for display.

For example, the first electronic device is a smart television, and the first electronic device is connected to another smart television having a display. The first electronic device may display the first subimage on a display of the device, and send the second subimage to the another smart television, so that the second subimage is displayed on the display of the another smart television.

In a possible implementation of the first aspect, the second aspect, or the third aspect, a manner in which the first electronic device obtains the first image may be: capturing, by the first electronic device, screen content of the first electronic device to obtain the first image. In other words, the first electronic device is a projection terminal, and is configured to send to-be-projected content to another electronic device.

In this solution, a to-be-projected image is processed on the projection terminal to obtain a plurality of subimages, and the projection terminal sends the plurality of subimages to a display terminal, so that the display terminal no longer needs to process the received image, and implementability of this solution can be ensured when the display terminal is a device with a weak processing capability.

In a possible implementation of the first aspect, the second aspect, or the third aspect, that the first electronic device obtains a first image includes: The first electronic device receives the first image from a third electronic device, where the first image is obtained by capturing screen content of the third electronic device.

In other words, the first electronic device may be a display terminal or a relay terminal, and is configured to receive the to-be-projected first image. For example, the third electronic device is a smartphone used as a projection terminal, and the first electronic device is a smart television used as the display terminal; or the third electronic device is a smartphone used as a projection terminal, and the first electronic device is a server used as the relay terminal; and the first electronic device further needs to send the at least two subimages to the display terminal.

In this solution, a to-be-projected image is processed on the relay terminal to obtain a plurality of subimages, and the relay terminal sends the plurality of subimages to the display terminal, so that the display terminal no longer needs to process the received image, and implementability of this solution can be ensured when the display terminal is a device with a weak processing capability.

In a possible implementation of the first aspect, the second aspect, or the third aspect, the at least two subimages include the first subimage and the second subimage.

In a possible implementation of the first aspect, the second aspect, or the third aspect, if the first image includes a first region and a second region, and a content type of the first region is different from a content type of the second region, the first subimage includes the first region, and the second subimage includes the second region.

In this solution, in a process of converting the to-be-projected image into the plurality of subimages, content of different types is distributed into different subimages through segmentation, and a same subimage includes content of a same type. This can ensure content continuity and avoid impact on a display effect of the projection content.

For example, if the first image includes a text region and a picture region, the first subimage may include the text region in the first image, and the second subimage may include the picture region in the first image.

In a possible implementation of the first aspect, the second aspect, or the third aspect, the first subimage and the second subimage are obtained by segmenting the first image in a width direction of the first image, and a segmentation line for segmenting the first image is located at a border between the first region and the second region.

In a possible implementation of the first aspect, the second aspect, or the third aspect, if the first image includes a first region, a second region, and a third region, the second region is located between the first region and the third region, a ratio of an area of the second region to an area of the first image is greater than or equal to a preset threshold, and the second region is a non-text region, the first subimage includes the first region and the third region, and the second subimage includes the second region.

A specific value of the preset threshold may be adjusted based on an actual requirement, and is not specifically limited. For example, when the actual requirement is that the content of the two subimages has a same order as the content of the first image as possible, the value of the preset threshold may be a large value, for example, 60%; and when the actual requirement is that areas of the two subimages are as equal as possible, the value of the preset threshold may be a small value, for example, 45%.

In other words, when the first image includes three consecutive regions with different content types, and an area of the non-text region in the middle in the three regions is large enough, the non-text region in the middle is distributed into one subimage through segmentation, and the other two regions are distributed into another subimage through segmentation.

It should be understood that, when the area of the second region between the first region and the third region is larger, if the first region and the second region are distributed into a same subimage through segmentation, and the third region is distributed into another subimage through segmentation, an area of the subimage including the first region and the second region is large, and an area of the subimage including the third region is small. Consequently, an area of a display that can effectively display projection content is small. Therefore, to ensure that the area of the display that can effectively display the projection content is as large as possible, during segmentation of the first image, it is ensured that areas of the plurality of subimages obtained through segmentation are as close as possible.

In this solution, when the ratio of the area of the second region in the first image to the area of the first image is greater than or equal to a specific value, the second region is distributed into a separate subimage through segmentation, and the first region and the third region are distributed into another subimage through segmentation, to ensure that areas of the two subimages obtained through segmentation can be as close as possible.

In a possible implementation of the first aspect, the second aspect, or the third aspect, the first image includes a text region, the first subimage includes a first text sub-region in the text region, and the second subimage includes a second text sub-region in the text region.

In a possible implementation of the first aspect, the second aspect, or the third aspect, the first subimage and the second subimage are obtained by segmenting the first image in a width direction of the first image, and a segmentation line for segmenting the first image is located between two adjacent text lines in the text region.

Optionally, the first image further includes a first non-text region, and the first subimage further includes the first non-text region. Alternatively, the first image further includes a second non-text region, and the second subimage further includes the second non-text region.

In a possible implementation of the first aspect, the second aspect, or the third aspect, a height of the first subimage is the same as a height of the second subimage.

In a possible implementation of the first aspect, the second aspect, or the third aspect, the method further includes: The first electronic device obtains a content switching instruction, where the content switching instruction instructs switching content displayed on the target display; the first electronic device obtains a third image in response to the content switching instruction, where a width of the third image is less than a height of the third image; and the first electronic device obtains at least two subimages of the third image, where the at least two subimages of the third image are displayed on the target display, content of the third image can be obtained from content of the at least two subimages of the third image, and a height of any one of the at least two subimages of the third image is less than the height of the third image.

Optionally, the content switching instruction is from the target display. When the target display includes at least two sub-displays, the content switching instruction may be from any sub-display.

In this solution, the content switching instruction is delivered on any sub-display to change content on all the sub-displays, so that a user can conveniently change the projection content, and convenience of adjusting the projection content is improved.

According to a fourth aspect, this application provides a projection method, including: A first electronic device obtains a first image, where the first image is an image to be projected onto a target display for display, a width of the first image is less than a height of the first image, content of the first image includes a first text, and a width of the target display is greater than a height of the target display; and the first electronic device obtains, based on the first image, a second text to be displayed on the target display, where text content of the second text is the same as text content of the first text, and a quantity of text lines in the second text is less than a quantity of text lines in the first text.

For example, the first electronic device re-typesets the first text based on content of the first text, to obtain the second text whose width is greater than that of the first text. Therefore, the quantity of text lines in the second text is less than the quantity of text lines in the first text, but a quantity of characters in a text line in the second text is greater than a quantity of characters in a text line in the first text.

In this solution, a text in a to-be-projected image is re-typeset, to reduce a quantity of text lines of the text in the to-be-projected image, and then effectively reduce a height of the to-be-projected image, so that a size of the to-be-projected image is more coordinated with a size of a display, and in addition to ensuring integrity of projection content, an area of the display that effectively displays the projection content is increased, and a display effect of the projection content is ensured.

In a possible implementation of the fourth aspect, the content of the first image further includes non-text content. The first electronic device obtains a second image based on the first image, where the second image includes the second text and the non-text content, a width of the second image is greater than the width of the first image, and a height of the second image is less than the height of the first image.

According to a fifth aspect, this application provides an electronic device, including: an obtaining module, configured to obtain a first image, where the first image is an image to be projected onto a target display for display, a width of the first image is less than a height of the first image, and a width of the target display is greater than a height of the target display; and a processing module, configured to obtain at least two subimages based on the first image, where the at least two subimages are displayed side by side on the target display, content of the first image can be obtained from content of the at least two subimages, and a height of any one of the at least two subimages is less than the height of the first image.

In a possible implementation of the fifth aspect, the target display is connected to a second electronic device, and the electronic device further includes: a sending module, configured to send a second image to the second electronic device, where the second image includes the at least two subimages arranged side by side.

In a possible implementation of the fifth aspect, the electronic device includes a target display; and the processing module is configured to display the at least two subimages side by side via the target display.

According to a sixth aspect, this application provides an electronic device, including: an obtaining module, configured to obtain a first image, where the first image is an image to be projected onto a target display for display, a width of the first image is less than a height of the first image, and the target display includes at least two sub-displays; and a processing module, configured to obtain at least two subimages based on the first image, where the at least two subimages are separately displayed on the at least two sub-displays, content of the first image can be obtained from content of the at least two subimages, and a height of any one of the at least two subimages is less than the height of the first image.

In a possible implementation of the fifth aspect or the sixth aspect, the target display is connected to the second electronic device, and the electronic device further includes: the sending module, configured to send the at least two subimages to the second electronic device.

In a possible implementation of the fifth aspect or the sixth aspect, the at least two subimages include a first subimage and a second subimage, the at least two sub-displays include a first sub-display and a second sub-display, the electronic device includes the first sub-display, and the electronic device is connected to the second sub-display. The electronic device further includes: the processing module, configured to display the first subimage via the first sub-display; and the sending module, configured to output the second subimage to the second sub-display for display.

In a possible implementation of the fifth aspect or the sixth aspect, the obtaining module is configured to capture screen content of the first electronic device to obtain the first image.

In a possible implementation of the fifth aspect or the sixth aspect, the obtaining module is configured to receive the first image from a third electronic device, where the first image is obtained by capturing screen content of the third electronic device.

In a possible implementation of the fifth aspect or the sixth aspect, the at least two subimages include the first subimage and the second subimage.

In a possible implementation of the fifth aspect or the sixth aspect, if the first image includes a first region and a second region, and a content type of the first region is different from a content type of the second region, the first subimage includes the first region, and the second subimage includes the second region.

In a possible implementation of the fifth aspect or the sixth aspect, the first subimage and the second subimage are obtained by segmenting the first image in a width direction of the first image, and a segmentation line for segmenting the first image is located at a border between the first region and the second region.

In a possible implementation of the fifth aspect or the sixth aspect, if the first image includes a first region, a second region, and a third region, the second region is located between the first region and the third region, a ratio of an area of the second region to an area of the first image is greater than or equal to a preset threshold, and the second region is a non-text region, the first subimage includes the first region and the third region, and the second subimage includes the second region.

In a possible implementation of the fifth aspect or the sixth aspect, the first image includes a text region, the first subimage includes a first text sub-region in the text region, and the second subimage includes a second text sub-region in the text region.

In a possible implementation of the fifth aspect or the sixth aspect, the first subimage and the second subimage are obtained by segmenting the first image in a width direction of the first image, and a segmentation line for segmenting the first image is located between two adjacent text lines in the text region.

In a possible implementation of the fifth aspect or the sixth aspect, a height of the first subimage is the same as a height of the second subimage.

In a possible implementation of the fifth aspect or the sixth aspect, the obtaining module is further configured to obtain a content switching instruction, where the content switching instruction instructs switching content displayed on the target display; the obtaining module is further configured to obtain a third image in response to the content switching instruction, where a width of the third image is less than a height of the third image; and the processing module is further configured to obtain at least two subimages of the third image, where the at least two subimages of the third image are displayed on the target display, content of the third image can be obtained from content of the at least two subimages of the third image, and a height of any one of the at least two subimages of the third image is less than the height of the third image.

According to a seventh aspect, this application provides an electronic device, including: an obtaining module, configured to obtain a first image, where the first image is an image to be projected onto a target display for display, a width of the first image is less than a height of the first image, content of the first image includes a first text, and a width of the target display is greater than a height of the target display; and a processing module, configured to obtain, based on the first image, a second text displayed on the target display, where text content of the second text is the same as text content of the first text, and a quantity of text lines in the second text is less than a quantity of text lines in the first text.

In a possible implementation of the seventh aspect, the content of the first image further includes non-text content; and the processing module is configured to obtain a second image based on the first image, where the second image includes the second text and the non-text content, a width of the second image is greater than a width of the first image, and a height of the second image is less than the height of the first image.

According to an eighth aspect, this application provides an electronic device, including a processor and a memory, where the memory is configured to store computer instructions, and when the processor executes the instructions, the electronic device is enabled to perform the method according to any one the foregoing aspects. The electronic device may be the electronic device according to the fifth aspect to the seventh aspect.

According to a ninth aspect, this application provides a computer-readable storage medium. The computer-readable storage medium stores instructions. When the instructions are run on an electronic device, the electronic device may perform the method according to any one the foregoing aspects.

According to a tenth aspect, this application provides a computer program product including instructions. When the instructions are run on an electronic device, the electronic device may perform the method according to any one the foregoing aspects.

According to an eleventh aspect, this application provides a chip. The chip includes a processor and a communication interface. The communication interface is configured to communicate with a module other than the chip. The processor is configured to run a computer program or instructions, so that an apparatus in which the chip is installed can perform the method according to any one of the foregoing aspects.

According to a twelfth aspect, this application provides a projection system, including the electronic device according to any one of the implementations of the fifth aspect to the seventh aspect and a target display.

For technical effects brought by any one of designs of the fifth aspect to the twelfth aspect, refer to technical effects brought by different implementations of the first aspect, the second aspect, the third aspect, or the fourth aspect. Details are not described herein again.

### BRIEF DESCRIPTION OF DRAWINGS

FIG. 1A is a diagram of projection display of a vertically typeset document in a related technology;
FIG. 1B is another diagram of projection display of a vertically typeset document in a related technology;
FIG. 2 is a diagram of an architecture of an application scenario according to an embodiment of this application;
FIG. 3 is a diagram of an architecture of another application scenario according to an embodiment of this application;
FIG. 4 is a diagram of a structure of an electronic device 401 according to an embodiment of this application;
FIG. 5 is a diagram of a structure of an electronic device 50 according to an embodiment of this application;
FIG. 6 is a schematic flowchart of a projection method according to an embodiment of this application;
FIG. 7 is a diagram of segmenting a first image according to an embodiment of this application;
FIG. 8 is a diagram of cropping and segmenting a first image according to an embodiment of this application;
FIG. 9 is a diagram of displaying a plurality of images side by side on one display according to an embodiment of this application;
FIG. 10 is a diagram of displaying a plurality of images side by side on two displays according to an embodiment of this application;
FIG. 11 is another diagram of displaying a plurality of images on two displays according to an embodiment of this application;
FIG. 12A is a diagram of performing segmentation at a border between different regions in an image according to an embodiment of this application;
FIG. 12B is another diagram of performing segmentation at a border between different regions in an image according to an embodiment of this application;
FIG. 12C is another diagram of performing segmentation at a border between different regions in an image according to an embodiment of this application;
FIG. 13(a) and FIG. 13(b) are diagrams of segmenting an image according to an embodiment of this application;
FIG. 14A is a diagram of projection after a text region is segmented according to an embodiment of this application;
FIG. 14B is a diagram of segmenting a text region according to an embodiment of this application;
FIG. 15 is another diagram of projection after a text region is segmented according to an embodiment of this application;
FIG. 16A and FIG. 16B are a schematic flowchart of image recognition and segmentation according to an embodiment of this application;
FIG. 17 is a diagram of adjusting an image segmentation line according to an embodiment of this application;
FIG. 18 is a diagram of adjusting an image segmentation line and segmenting an image according to an embodiment of this application;
FIG. 19 is a diagram of segmenting an image after region adjustment is performed on the image according to an embodiment of this application;
FIG. 20 is a schematic flowchart of a projection method according to an embodiment of this application;
FIG. 21 is a schematic flowchart of another projection method according to an embodiment of this application;
FIG. 22 is a diagram of sending a plurality of subimages to a display terminal by a projection terminal according to an embodiment of this application;
FIG. 23 is a diagram of sending subimages to a plurality of display terminals by a projection terminal according to an embodiment of this application;
FIG. 24 is a diagram of sending subimages to a display terminal by a forwarding terminal according to an embodiment of this application;
FIG. 25 is a schematic flowchart of another projection method according to an embodiment of this application;
FIG. 26 is a diagram of projection display after projection content is re-typeset according to an embodiment of this application;
FIG. 27 is a diagram of a structure of an electronic device 2700 according to an embodiment of this application;
FIG. 28 is a diagram of a structure of an electronic device 2800 according to an embodiment of this application; and
FIG. 29 is a diagram of a structure of an electronic device 2900 according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of new scenarios, the technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the data termed in such a way are interchangeable in proper cases, so that embodiments described herein can be implemented in other orders than the order illustrated or described herein.

Moreover, the terms "include", "contain" and any other variants mean to cover the non-exclusive inclusion, for example, a process, method, system, product, or device that includes a list of steps or modules is not necessarily limited to those listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

For ease of understanding, the following describes technical terms in embodiments of this application.

### (1) Projection technology

The projection technology means that content displayed on a display of an electronic device A is transmitted to an electronic device B in a data transmission manner, and the content displayed on the display of the electronic device A is synchronously displayed on a display of the electronic device B. For example, content displayed on a mobile device like a mobile phone, a tablet computer, or a laptop computer is transmitted in a wireless or wired manner to a device on which a television, a projector, or a splicing screen with a large display is located, and the content transmitted by the mobile device is displayed on the television, the projector, or the splicing screen.

### (2) Projection terminal

The projection terminal is an electronic device that generates and sends projection content in a projection process.

### (3) Display terminal

The display terminal is an electronic device that receives, in a projection process, projection content sent by a projection terminal and synchronously displays the projection content.

Currently, in a conference scenario or a teaching scenario, a user usually uses a projection technology to project a document on a projection terminal to a dedicated display terminal for display, to help another user view projection content. Currently, a document is usually vertically typeset, in other words, a width of a page in the document is less than a height of the page. Therefore, the document is usually suitable for being displayed on a display that is in portrait mode. However, because the display terminal is usually a wide-screen device, in other words, a height of a display of the display terminal is usually less than a width thereof, when content on the projection terminal is projected onto the display terminal, a proportion of an effective projection area is small. Consequently, a large quantity of regions in which no projection content is displayed appears on the display of the display terminal, and a display effect of the projection content is poor. Alternatively, when the display terminal zooms in and displays content sent by the projection terminal, because a size ratio of the content sent by the projection terminal is not coordinated with a size ratio of a display of the display terminal, only a small amount of effective content can be displayed on the display of the display terminal, and a display effect of the projection content is also poor.

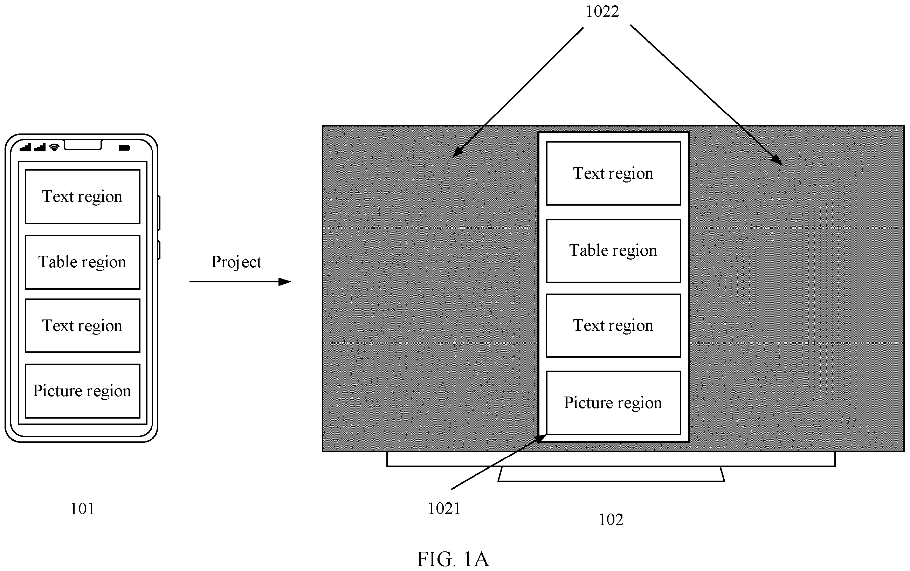

For example, FIG. 1A is a diagram of projection display of a vertically typeset document in a related technology. As shown in FIG. 1A, a vertically typeset document is displayed on a projection terminal 101 that is in portrait mode, and the vertically typeset document includes regions having different types of content, such as a text region, a table region, and a picture region. When the vertically typeset document is displayed on the projection terminal 101 that is in portrait mode, most regions on a display of the projection terminal 101 are used to display the vertically typeset document, and a display effect is good.

However, when the vertically typeset document is projected onto a display terminal 102 for display, because a display of the display terminal 102 is in landscape mode, in other words, a width of the display of the display terminal 102 is greater than a height thereof, but a width of the vertically typeset document is less than a height thereof, a region (namely, an effective display region 1021) in which the vertically typeset document is actually displayed on the display of the display terminal 102 is small. As a result, a region (namely, an ineffective display region 1022) in which the vertically typeset document cannot be displayed on the display of the display terminal 102 is large. In other words, in a projection process, a large quantity of regions in which the projection content cannot be displayed appears on the display of the display terminal 102, and a display effect of the projection content is poor. This easily affects normal viewing of the projection content by a user.

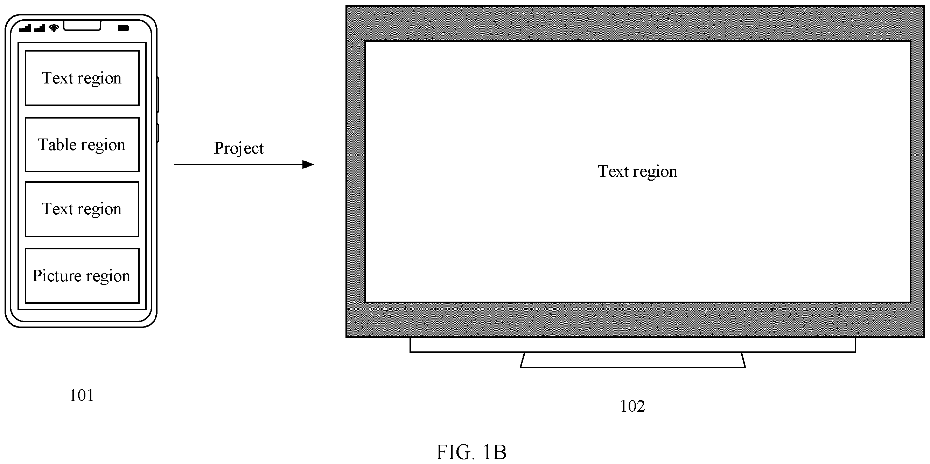

FIG. 1B is another diagram of projection display of a vertically typeset document in a related technology. As shown in FIG. 1B, a vertically typeset document is displayed on a projection terminal 101 that is in portrait mode, and the vertically typeset document includes regions having different types of content, such as a text region, a table region, and a picture region. When the vertically typeset document is displayed on the projection terminal 101 that is in portrait mode, most regions on a display of the projection terminal 101 are used to display the vertically typeset document, and a display effect is good.

When the vertically typeset document is projected onto a display terminal 102 for zoom-in display, because a display of the display terminal 102 is in landscape mode, in other words, a width of the display of the display terminal 102 is greater than a height thereof, but a width of the vertically typeset document is less than a height thereof, when an effective display region of the display of the display terminal 102 is large, only a part of content of the vertically typeset document (namely, the text region in the vertically typeset document) can be actually displayed on the display of the display terminal 102. As a result, most of the content of the vertically typeset document (namely, the table region and the picture region in the vertically typeset document) cannot be displayed on the display terminal 102 at the same time. In other words, in a projection process, all content of the vertically typeset document cannot be simultaneously displayed on the display of the display terminal 102, and a display effect of the projection content is poor. This also easily affects normal viewing of the projection content by a user.

In view of this, embodiments of this application provide a projection method. A to-be-projected image sent by a projection terminal is vertically segmented, to obtain a plurality of subimages, where heights of the plurality of subimages are all less than a height of the to-be-projected image. In this way, the plurality of subimages are horizontally displayed side by side on a display of a display terminal. This can increase an area of the display that effectively displays projection content and ensure a display effect of the projection content on the basis of ensuring integrity of the projection content.

For ease of understanding, the following first describes a scenario to which the projection method provided in embodiments of this application is applied.

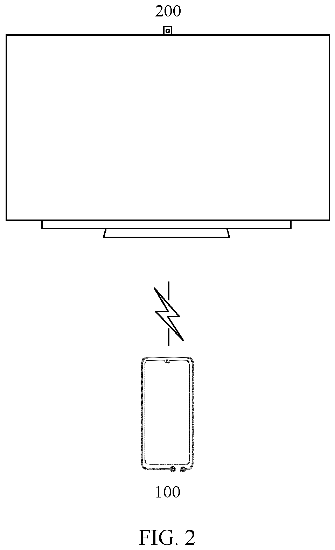

FIG. 2 is a diagram of an architecture of an application scenario according to an embodiment of this application.

As shown in FIG. 2, an electronic device 100 may establish a wireless connection to an electronic device 200 in a wireless communication manner like Wi-Fi or Bluetooth. Alternatively, an electronic device 100 may establish a connection to an electronic device 200 in a wired manner. After the electronic device 100 establishes a connection to the electronic device 200, the electronic device 100 projects content that needs to be displayed onto the electronic device 200, to display projection content on the electronic device 200. A specific process may be as follows: The electronic device 100 generates projection data, and sends the projection data to the electronic device 200. After receiving the projection data, the electronic device 200 parses the projection data to obtain corresponding projection content, and displays the projection content on a display of the electronic device 200.

In this embodiment of this application, the electronic device 100 may alternatively be connected to the electronic device 200 through a transit device. A universal serial bus (universal serial bus, USB) interface of a data cable may be plugged in the transit device, and a Type-C interface of the data cable is plugged in the electronic device 100. The transit device may alternatively be connected to the electronic device 200 through an adapter cable. The adapter cable may include any one of a high-definition multimedia interface (high-definition multimedia interface, HDMI) adapter cable, a video graphics array (video graphics array, AGI) adapter cable, a digital visual interface (digital visual interface, DVI) adapter cable, and the like. The transit device in this embodiment of this application may be, for example, a mobile high-definition link (mobile high-definition link, MHL) device. The MHL device may simultaneously transmit an audio signal and a video signal in the electronic device 100 to the electronic device 200 for display.

In a possible projection manner, the electronic device 100 may serve as a controlling device, and the electronic device 200 may serve as a mirroring device of the electronic device 100. After the electronic device 100 establishes a connection to the electronic device 200, the electronic device 100 sends corresponding projection content to the electronic device 200 based on content displayed on a display of the electronic device 100, so that the electronic device 200 and the electronic device 100 can simultaneously display the same content.

In another possible projection manner, the electronic device 100 may serve as a controlling device, and the electronic device 200 may serve as a secondary device of the electronic device 100. After the electronic device 100 establishes a connection to the electronic device 200, the electronic device 100 is equivalent to having two displays. One is a display of the electronic device 100, and the other is the display of the electronic device 200 connected to the electronic device 100. Projection content sent by the electronic device 100 to the electronic device 200 may be different from content displayed on the display of the electronic device 100, that is, the electronic device 100 and the electronic device 200 separately display different content. For example, the display of the electronic device 100 may display content of document A, and the projection content sent by the electronic device 100 to the electronic device 200 is content of document B. Therefore, the display of the electronic device 200 displays the content of document B.

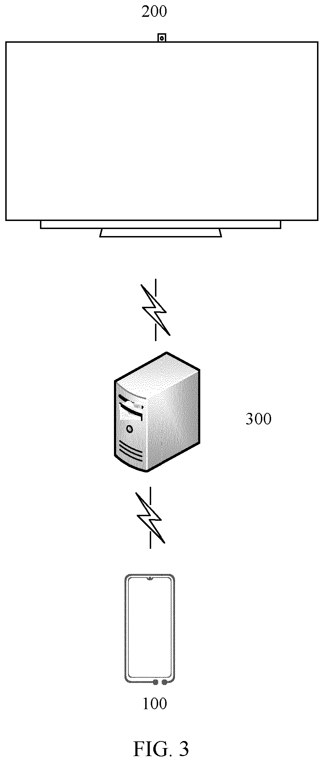

FIG. 3 is a diagram of an architecture of another application scenario according to an embodiment of this application.

As shown in FIG. 3, both an electronic device 100 and an electronic device 200 may establish a connection to an electronic device 300 in a wireless communication manner or a wired communication manner. The electronic device 300 may be, for example, a server deployed on a cloud, and can provide a cloud service for the electronic device 100 and the electronic device 200.

In a possible projection manner, after the electronic device 100 establishes a connection to the electronic device 300, the electronic device 100 may upload data, for example, a photo, a video, or a document, to the electronic device 300 after logging into a corresponding account, and the electronic device 300 backs up the data in the electronic device 100 in the cloud. After the electronic device 200 establishes a connection to the electronic device 300, the electronic device 200 may obtain, from the electronic device 300 by logging in to a corresponding account, and display the data, for example, the photo, the video, or the document, uploaded by the electronic device 100, to implement a projection process based on the cloud service provided by the electronic device 300.

In another possible projection manner, the electronic device 100 and the electronic device 200 separately establish a connection to the electronic device 300, the electronic device 100 sends projection data to the electronic device 300, and the electronic device 300 forwards the projection data to the electronic device 200. In this way, after obtaining the projection data forwarded by the electronic device 300, the electronic device 200 parses the projection data to obtain the projection content, and displays, on the display, the projection content obtained through parsing. The projection content may be specific content that needs to be displayed on the display, for example, a photo or a document. The projection data may be data obtained by encoding the projection content. Generally, to facilitate transmission of projection content between different electronic devices, an electronic device used as a projection terminal usually encodes the projection content (for example, the photo) into a video stream, and then transmits the video stream to an electronic device used as a display terminal. The electronic device used as the display terminal may obtain the projection content by parsing the obtained video stream. The video stream obtained by the projection terminal through encoding is the projection data. In other words, the projection data is data that is obtained based on the projection content and that is easy to transmit.

Specifically, the method provided in embodiments of this application may be applied to the electronic device 100, the electronic device 200, and the electronic device 300 shown in FIG. 2 and FIG. 3.

The foregoing describes scenarios to which the projection method provided in embodiments of this application is applied. The following describes an electronic device to which the projection method provided in embodiments of this application is applied.

The method provided in embodiments of this application may be applied to an electronic device that can implement a projection function. For example, the electronic device in embodiments of this application may be a server, a smartphone (mobile phone), a personal computer (personal computer, PC), a laptop computer, a tablet computer, a smart television, a splicing screen, a projector, a wearable device (for example, a smartwatch, smart glasses, or a smart helmet), a virtual reality (virtual reality, VR) device, an augmented reality (augmented reality, AR) device, a wireless electronic device in industrial control (industrial control), a wireless electronic device in self driving (self driving), a wireless electronic device in remote medical surgery (remote medical surgery), a wireless electronic device in smart grid (smart grid), a wireless terminal in transportation safety (transportation safety), a wireless electronic device in smart city (smart city), a wireless electronic device in smart home (smart home), or the like. A specific form of the electronic device is not specifically limited in the following embodiments.

The application scenarios shown in FIG. 2 and FIG. 3 are used as an example, where the electronic device 100 used as a projection content transmit end may be, for example, a device like a smartphone, a laptop computer, a tablet computer, or a personal computer; the electronic device 200 used as a projection content receive end may be, for example, a large-screen display device like a smart television, a projector, or a splicing screen; and the electronic device 300 used as a cloud projection content transmit end may be, for example, a server.

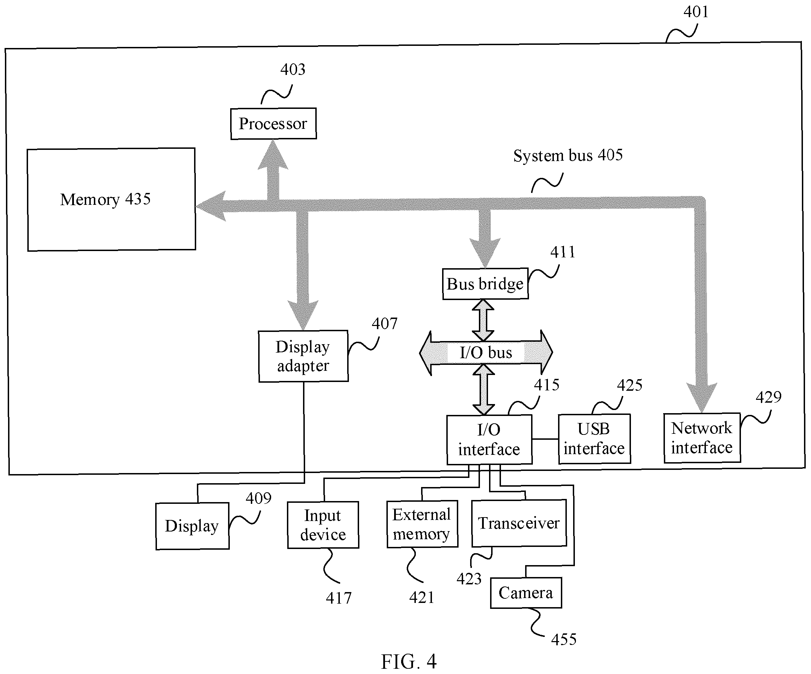

FIG. 4 is a diagram of a structure of an electronic device 401 according to an embodiment of this application. The electronic device 401 shown in FIG. 4 may be the electronic device 100 or the electronic device 200. As shown in FIG. 4, the electronic device 401 includes a processor 403, and the processor 403 is coupled to a system bus 405. The processor 403 may be one or more processors, and each processor may include one or more processor cores. A display adapter (video adapter) 407 may drive a display 409, and the display 409 is coupled to the system bus 405. The system bus 405 is coupled to an input/output (I/O) bus through a bus bridge 411. An I/O interface 415 is coupled to the I/O bus. The I/O interface 415 communicates with a plurality of I/O devices, such as an input device 417 (for example, a touchscreen), an external memory 421 (for example, a hard disk, a floppy disk, an optical disc, or a USB flash drive), a multimedia interface, a transceiver 423 (which may send and/or receive a radio communication signal), a camera 455 (which may capture static and dynamic digital video pictures), and an external USB interface 425. Optionally, an interface connected to the I/O interface 415 may be a USB interface.

The processor 403 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus, for example, an ASIC.

The electronic device 401 may communicate with another electronic device through the network interface 429, to implement data transmission in a projection process.

The processor 403 may communicate with the memory 435 through the system bus 405, and extract an instruction and data in an application from the memory 435, to execute a program.

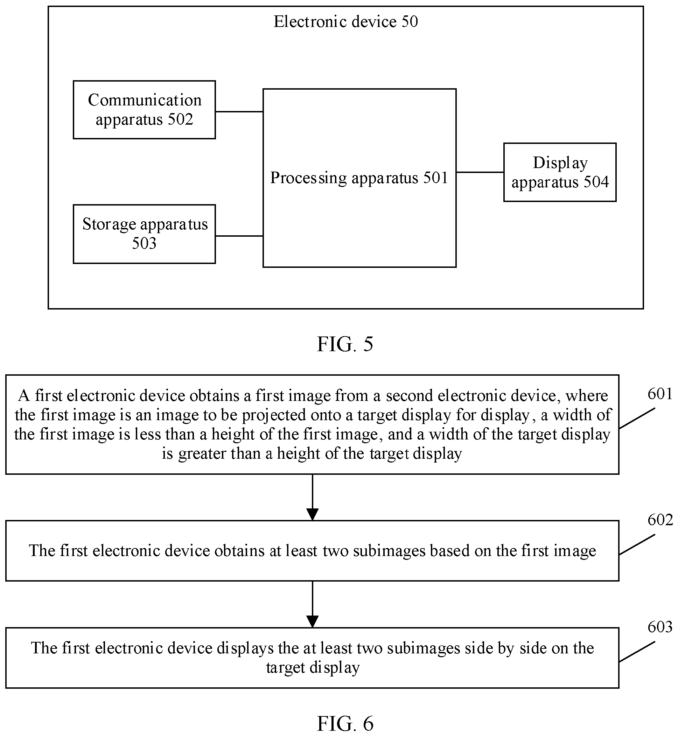

FIG. 5 is a diagram of a structure of an electronic device 50 according to an embodiment of this application. The electronic device 50 shown in FIG. 5 may be the foregoing electronic device 200, that is, the electronic device 50 is a device configured to display projection content. As shown in FIG. 5, the electronic device 50 includes a processing apparatus 501, a communication apparatus 502, a storage apparatus 503, and a display apparatus 504.

The communication apparatus 502 may include a Wi-Fi module, a general packet radio service (General Packet Radio service) module, a high-definition multimedia interface (High Definition Multimedia Interface, HDMI) module, a communication module of another wireless communication network/wired communication network, or the like. The communication apparatus 502 is configured to implement data exchange between the electronic device 500 and another device. In this embodiment of this application, the communication apparatus 502 may further include a communication apparatus that supports implementation of a wireless projection function, for example, a projection connection unit. This is not limited in this application. In addition, based on an actual requirement, the communication apparatus 502 may further include an interface like a USB interface or a serial/parallel interface, configured to implement data exchange between components inside the electronic device. The interface may be determined based on a product type of the electronic device. A structure included in the communication apparatus 502 and a communication manner of the communication apparatus are not limited in this application, and may be determined based on a case.

In some embodiments, when the communication apparatus 502 includes a plurality of input interfaces, for example, a plurality of HDMI interfaces, one of the HDMI interfaces may be selected to transmit wireless projection data, and another HDMI interface may further receive other multimedia data, so that the electronic device can normally output, in a non-wireless projection mode, the multimedia data received by the another HDMI interface.

The storage apparatus 503 may be configured to store a program for implementing a projection method described in the following method embodiments. The processing apparatus 501 is configured to load and execute the program stored in the storage apparatus 503, to implement steps of the projection method.

In some embodiments, the storage apparatus 503 may include a high speed random access memory, or may include a nonvolatile memory, for example, at least one magnetic disk storage device or another volatile solidstate storage device. In this application, respective composition structures and functions of the storage apparatus 503 and the processing apparatus 501 are not described in detail, and are determined based on a case.

The display apparatus 504 may include an apparatus like a touch sensing unit or a display that senses a touch event on a touch display panel. The display apparatus 504 is configured to display content of the electronic device 500, projection content in a projection scenario, or the like. A type of the display apparatus 504 and a working principle of displayed content of the display apparatus 504 are not described in detail in this embodiment of this application.

It should be understood that structures of the electronic devices shown in FIG. 4 and FIG. 5 do not constitute a limitation on the electronic device in embodiments of this application. During actual application, the electronic device may include more or fewer components than those shown in FIG. 4 and FIG. 5, or combine some components, for example, at least one output device like a speaker, a vibration mechanism, or a light, and at least one input device like a keyboard, a mouse, or a pickup device. Details are not listed one by one in embodiments of this application.

FIG. 6 is a schematic flowchart of a projection method according to an embodiment of this application. As shown in FIG. 6, a procedure of the projection method includes steps 601 to 603.

Step 601: A first electronic device obtains a first image from a second electronic device, where the first image is an image to be projected onto a target display for display, a width of the first image is less than a height of the first image, and a width of the target display is greater than a height of the target display.

In this embodiment, the first electronic device is an electronic device that receives and displays projection content, and the second electronic device is an electronic device that generates and sends the projection content. That is, the first electronic device is a display terminal, and the second electronic device is a projection terminal.

In a projection process, the second electronic device sends projection data to the first electronic device in a video stream manner. The first electronic device can obtain the first image by parsing the received projection data, and content of the first image is to-be-projected content. The content of the first image is vertically typeset content, for example, a vertically typeset document. Therefore, the width of the first image is less than the height of the first image.

Simply speaking, when the first image is displayed on a display of an electronic device, the width of the first image may be a length of the first image on the display in a horizontal direction, and the height of the first image may be a length of the first image on the display in a vertical direction. Generally, the width and the height of the first image may be determined based on a resolution of the first image. For example, it is assumed that the resolution of the first image is 1080×1920, and then it may be determined that the width of the first image is 1080 and the height of the first image is 1920.

Step 602: The first electronic device obtains at least two subimages based on the first image.

In this embodiment, for the at least two subimages obtained based on the first image, the content of the first image can be obtained based on content of the at least two subimages. That is, all the content of the at least two subimages is the same as the content of the first image. After the first image is segmented into the at least two subimages, the content of the first image is not lost. In addition, a height of any one of the at least two subimages is less than the height of the first image.

The at least two subimages may be two or more subimages. That is, the first electronic device can obtain two subimages, three subimages, or even more subimages based on the first image. The first electronic device may determine, based on a size of the first image and a size of the target display, a quantity of subimages obtained by segmenting the first image. The quantity of subimages is not specifically limited in this embodiment. For understanding, the following describes this embodiment by using an example in which the first electronic device uses the at least two subimages including the first subimage and the second subimage.

Optionally, the first electronic device may segment the first image in a width direction of the first image, to obtain the first subimage and the second subimage. The segmentation on the first image in the width direction of the first image can reduce heights of the first subimage and the second subimage that are obtained through segmentation. In other words, for the first subimage and the second subimage that are obtained through segmentation, the height of the first subimage and the height of the second subimage are less than the height of the first image. In addition, in some possible implementations, a width of the first subimage and a width of the second subimage may be the same as the width of the first image.

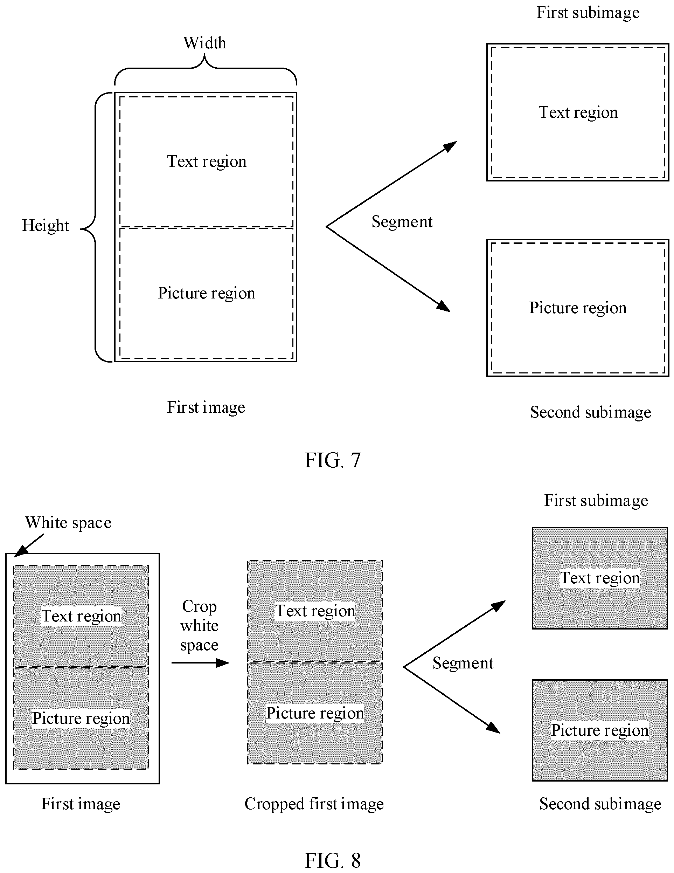

For example, FIG. 7 is a diagram of segmenting a first image according to an embodiment of this application. As shown in FIG. 7, before the first image is segmented, the first image includes two regions: a text region and a picture region. Content of the text region is text content, and content of the picture region is a picture. After the first image is segmented in the width direction of the first image, the first image is segmented into the first subimage and the second subimage, where the first subimage includes the text region in the first image, and the second subimage includes the picture region in the first image.

Optionally, when there is white space on an edge of the first image, the white space on the edge of the first image does not belong to effective content of the first image. In this case, the first electronic device may alternatively crop the white space on the edge of the first image, and then segment a first image obtained after the white space is cropped, to obtain the first subimage and the second subimage, so as to increase an area proportion of effective content of the first subimage and effective content of the second subimage in the image.

For example, FIG. 8 is a diagram of cropping and segmenting a first image according to an embodiment of this application. As shown in FIG. 8, regions having effective content of the first image are a text region and a picture region, and there is also a part of white space at an edge position (namely, a position other than the text region and the picture region) of the first image. A cropped first image is obtained after the white space at the edge position of the first image is cropped, where the cropped first image includes only the text region and the picture region. Then, the cropped first image is segmented to obtain a first subimage including the text region and a second subimage including the picture region.

Step 603: The first electronic device displays the at least two subimages side by side on the target display.

Because the width of the target display is greater than the height of the target display, the at least two subimages are displayed side by side on the target display, to effectively expand a region of the target display that can effectively display projection content, and avoid a large quantity of regions in which the projection content cannot be displayed on the left and right sides of the target display.

In this embodiment, that the at least two subimages include the first subimage and the second subimage is used as an example. There may be a plurality of manners of displaying the first subimage and the second subimage side by side on the target display.

In a possible implementation, the target display includes only one display connected to the first electronic device. The first electronic device displays the first subimage and the second subimage side by side on the target display in a width direction of the target display, that is, the first subimage and the second subimage are simultaneously displayed on a same display.

It should be noted that the display connected to the first electronic device may be a display that is separately deployed with the first electronic device, that is, the first electronic device and the display are independently deployed, and the first electronic device is connected to the display in a wired or wireless manner. For example, the first electronic device is a host of a personal computer, and the display connected to the first electronic device is a liquid crystal display, where the liquid crystal display is connected to the host of the personal computer through a data cable.

Alternatively, the display connected to the first electronic device may be a display deployed on the first electronic device, that is, the first electronic device and the display are of an integrated structure. An apparatus for receiving and processing projection data in the first electronic device is connected to the display on the first electronic device, to display the projection content on the display. For example, the first electronic device is a smart television, a display is deployed on the smart television, a processor for receiving and processing projection data is deployed inside the smart television, and there is a connection relationship between the processor on the smart television and the display.

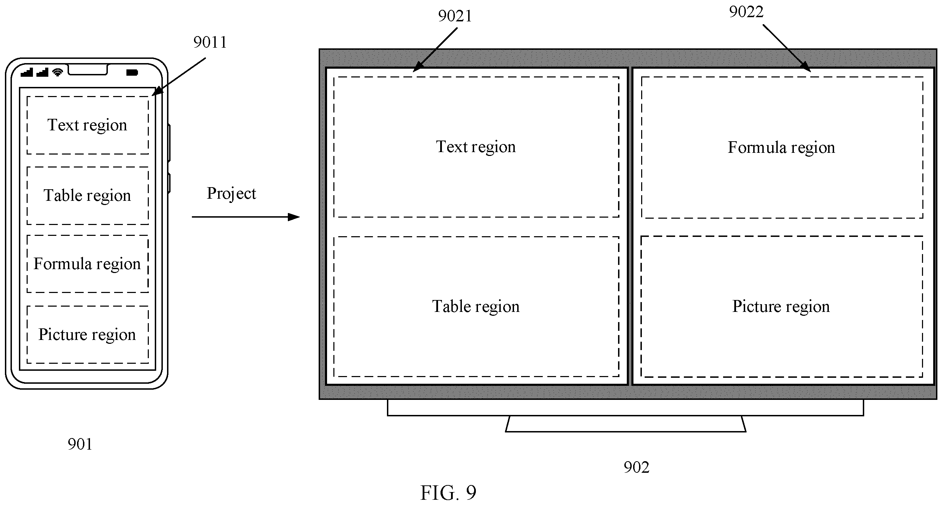

For example, FIG. 9 is a diagram of displaying a plurality of images side by side on one display according to an embodiment of this application. As shown in FIG. 9, an image 9011 (corresponding to the first image) is displayed on a projection terminal 901 (corresponding to the second electronic device). The image 9011 includes four regions: a text region, a table region, a formula region, and a picture region. After the projection terminal 901 projects the image 9011 to a display terminal 902 (corresponding to the first electronic device), the display terminal 902 segments the image 9011 into a subimage 9021 (corresponding to the first subimage) and a subimage 9022 (corresponding to the second subimage), and displays the subimage 9021 and the subimage 9022 side by side on a display of the display terminal 902. The subimage 9021 includes the text region and the table region in the image 9011, and the subimage 9022 includes the formula region and the picture region in the image 9011. In other words, all content of the image 9011 can be displayed through the subimage 9021 and the subimage 9022. It can be learned, after FIG. 1A is compared with FIG. 9 that, after the display terminal 902 segments and displays the image, an area of the display of the display terminal 902 that can effectively display projection content is increased. For the display terminal 902 that displays the same projection content, a larger area of the display terminal 902 that can effectively display the projection content indicates a higher zoom-in ratio at which the projection content can be displayed on the display terminal 902, to ensure a display effect of the projection content.

In another possible implementation, the target display includes a first sub-display and a second sub-display that are separately connected to the first electronic device. When the target display includes the two displays, the first electronic device displays the first subimage on the first sub-display, and displays the second subimage on the second sub-display. In other words, the first electronic device segments the received first image into two subimages, and separately displays different subimages on different displays.

In this implementation, for the first sub-display and the second sub-display that are connected to the first electronic device, the first sub-display may be a display deployed on the first electronic device, and the second sub-display may be a display that is separately deployed with the first electronic device. That is, the first sub-display and the first electronic device are of an integrated structure, and the second sub-display and the first electronic device are independently deployed. For example, the first electronic device is a smart television, a first sub-display is deployed on the smart television, a processor for receiving and processing projection data is deployed inside the smart television, and there is a connection relationship between the processor on the smart television and the first sub-display. In addition, the first electronic device is further connected to a second sub-display, and the second sub-display may be deployed on another smart television.

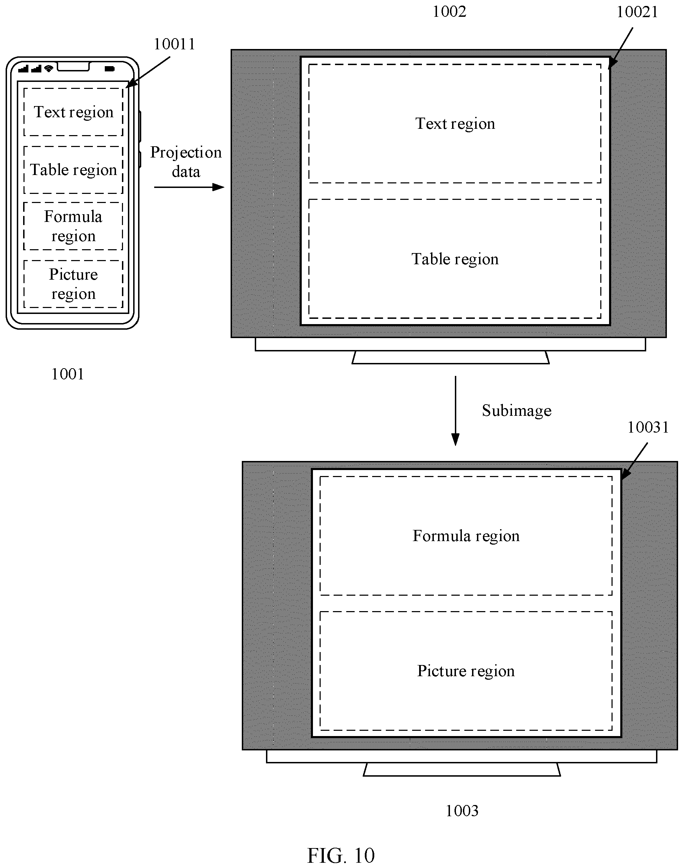

For example, FIG. 10 is a diagram of displaying a plurality of images side by side on two displays according to an embodiment of this application. As shown in FIG. 10, an image 10011 (namely, the first image) is displayed on a projection terminal 1001 (namely, the second electronic device). The image 10011 includes four regions: a text region, a table region, a formula region, and a picture region. After the projection terminal 1001 projects the image 10011 to a display terminal 1002 (namely, the first electronic device), the display terminal 1002 segments the image 10011 into a subimage 10021 (namely, the foregoing first subimage) and a subimage 10031 (namely, the foregoing second subimage). Then, the display terminal 1002 displays the subimage 10021 on a display of the terminal, and sends the subimage 10031 to a display terminal 1003, so that the subimage 10031 is synchronously displayed on a display of the display terminal 1003. That is, for the subimage 10021 and the subimage 10031 that are obtained by segmenting the image 10011, the subimage 10021 is displayed on the display terminal 1002 connected to the projection terminal 1001, and the subimage 10031 is displayed on the display terminal 1003 connected to the display terminal 1002.

In this implementation, the first sub-display and the second sub-display that are connected to the first electronic device may alternatively be deployed independently of the first electronic device, that is, the first electronic device is separated from the first sub-display and the second sub-display. For example, the first electronic device is a host of a personal computer, the first electronic device is separately connected to two liquid crystal displays, and the two liquid crystal displays are respectively a first sub-display and a second sub-display.

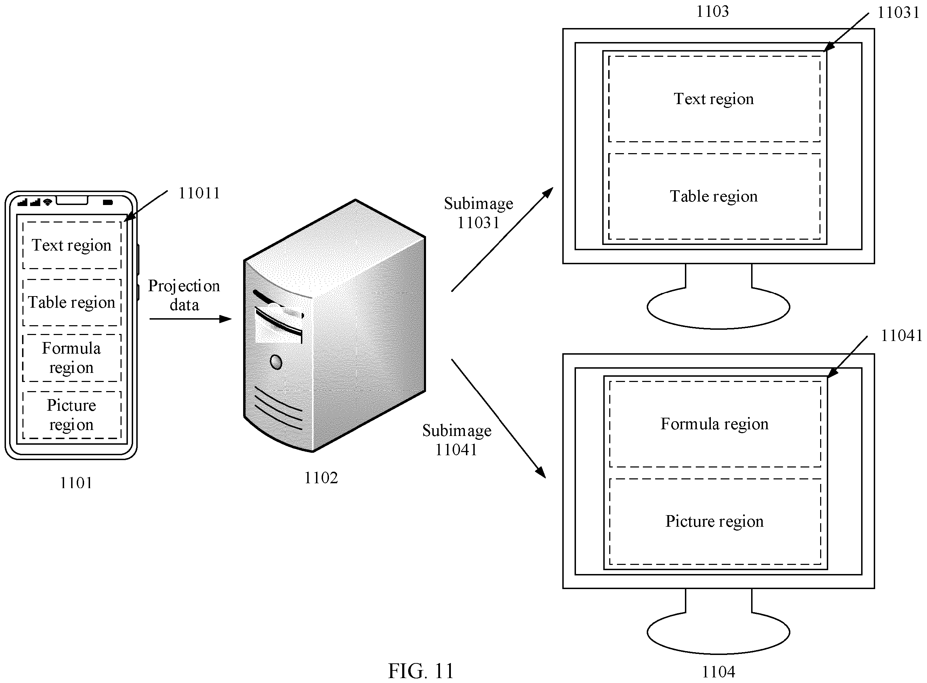

For example, FIG. 11 is another diagram of displaying a plurality of images on two displays according to an embodiment of this application. An image 11011 (namely, the first image) is displayed on a projection terminal 1101 (namely, the second electronic device). After the projection terminal 1101 sends the image 11011 to a display terminal 1102 (namely, the first electronic device), the display terminal 1102 segments the image 11011 into a subimage 11031 (namely, the foregoing first subimage) and a subimage 11041 (namely, the foregoing second subimage). Then, the display terminal 1102 outputs the subimage 11031 to a display 1103 (namely, the first sub-display) for display, and outputs the subimage 11041 to a display 1104 for display. In this way, the subimage 11031 is displayed on the display 1103, and the subimage 11041 is displayed on the display 1104, that is, the subimage 11031 and the subimage 11041 are displayed on different displays.

It should be noted that, the foregoing embodiment describes a process of segmenting the first image into the first subimage and the second subimage, to display the two subimages side by side on the target display. During actual application, the first electronic device may segment the first image into more subimages based on a quantity of displays actually included in the target display or a size of the target display, and display, side by side, the plurality of subimages obtained through segmentation on the target display. In conclusion, a quantity of subimages obtained by the first electronic device through segmentation may be two or more. The quantity of subimages obtained by the first electronic device through segmentation is not specifically limited in embodiments of this application.

For example, it is assumed that the target display includes three displays connected to the first electronic device. In this case, the first electronic device segments the first image into a first subimage, a second subimage, and a third subimage, and separately displays the three subimages on three different displays. For another example, it is assumed that the width of the target display is far greater than the height of the target display. In this case, the first electronic device segments the first image into a first subimage, a second subimage, and a third subimage, and displays the three subimages side by side on the same display.

In addition, the foregoing examples describe the manner of displaying the two subimages side by side by using an example in which the two subimages are displayed side by side horizontally on the target display. In some implementations, the at least two subimages obtained by using the first image may also be displayed side by side on the target display in a vertical manner or in a combination of a horizontal manner and a vertical manner. For example, it is assumed that the at least two subimages include a first subimage and a second subimage. The first subimage and the second subimage may be displayed side by side on the target display in a top-down order, that is, vertically displayed side by side on the target display.

For another example, the at least two subimages include a first subimage, a second subimage, a third subimage, and a fourth subimage. The first subimage and the second subimage are horizontally displayed side by side in an upper half region of the target display, and the third subimage and the fourth subimage are horizontally displayed side by side in a lower half region of the same target display. In other words, the first two subimages (the first subimage and the second subimage) and the last two subimages (the third subimages and fourth subimages) are vertically displayed side by side. In other words, the first subimage, the second subimage, the third subimage, and the fourth subimage are actually displayed side by side on the target display in a combination of a horizontal manner and a vertical manner.

The foregoing describes a process of segmenting a to-be-projected image to display a plurality of subimages side by side. For ease of understanding, the following describes in detail a specific manner of segmenting the image by using an example in which the image is segmented into two subimages.

In this embodiment, to ensure continuity of content of the subimages obtained through segmentation, before the image is segmented, a type of content of the image is recognized, to determine a manner of segmenting the image based on the content of the image.

For example, before the first electronic device segments the first image, the first electronic device recognizes the content of the first image by using a conventional algorithm like a target detection algorithm or a semantic segmentation algorithm or by using a deep learning method, to segment the first image into one or more regions based on the content of the first image. Content of adjacent regions in the first image has different types. For example, the first image may be segmented into a text region and a non-text region, where content of the text region is text content, and content of the non-text region is non-text content. Specifically, the non-text region may include a title region, a picture region, a formula region, or a table region.

In a process in which the first electronic device segments the first image, because the content of the non-text region is continuous content such as a picture, a formula, or a table, the first electronic device does not segment the same non-text region in the first image, to ensure continuity of the content of the non-text region. A manner of segmenting the first image includes at least the following plurality of manners.

Manner 1: A segmentation line of the first image is located at a border between different regions in the first image, that is, a same region in the first image is not segmented.

In Manner 1, after the first image is segmented, cases of region distribution in subimages obtained by segmenting the first image include Case 1.1 and Case 1.2.

Case 1.1: The same subimage includes one region or a plurality of adjacent regions in the first image.

For example, the segmentation line for segmenting the first image is located at a border between a first region and a second region in the first image, and the first region and the second region have different types of content. For the first subimage and the second subimage that are obtained by segmenting the first image, the first subimage includes the first region, and the second subimage includes the second region. In other words, the first region and the second region that are in the first image and that have different types of content are distributed into different subimages through segmentation. The first region or the second region may be either the text region or the non-text region. For example, the first region is the text region, and the second region is the picture region; or the first region is the picture region, and the second region is the table region.

Further, when the first subimage includes the first region and the second subimage includes the second region, the first subimage and/or the second subimage may further include another region in the first image. For example, it is assumed that the first region is the text region, and the second region is the picture region. In this case, the first subimage may include the table region and the text region; or the second subimage may include the picture region and the formula region; or the first subimage includes the table region and the text region, and the second subimage includes the picture region and the formula region.

In general, the segmentation line in the first image is located at a border between two adjacent regions, so that the first subimage obtained through segmentation includes one or more regions, and the second subimage also includes one or more regions.

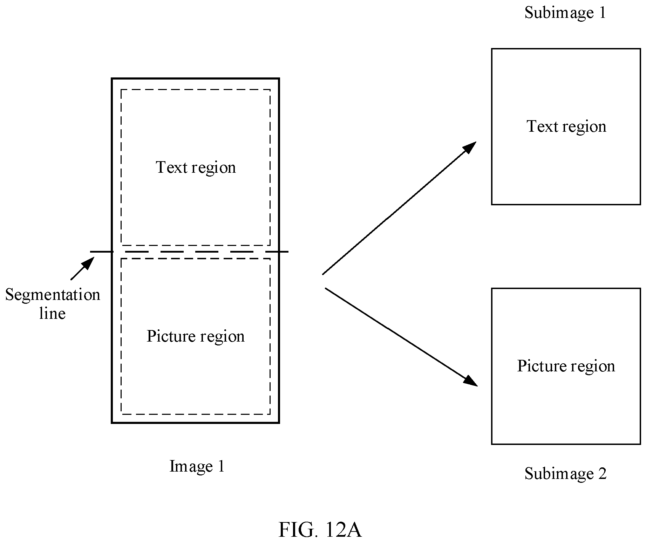

For example, refer to FIG. 12A. FIG. 12A is a diagram of performing segmentation at a border between different regions in an image according to an embodiment of this application. As shown in FIG. 12A, an image 1 includes a text region and a picture region, and a segmentation line for segmenting the image 1 is located at a border between the text region and the picture region. In this way, for a subimage 1 and a subimage 2 that are obtained by segmenting the image 1, the subimage 1 includes only the text region, and the subimage 2 includes only the picture region.

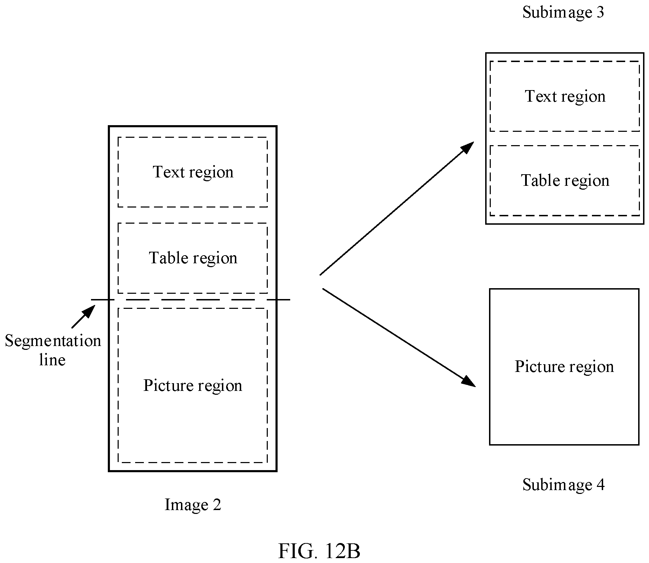

FIG. 12B is another diagram of performing segmentation at a border between different regions in an image according to an embodiment of this application. As shown in FIG. 12B, an image 2 includes a text region, a table region, and a picture region, and a segmentation line for segmenting the image 2 is located at a border between the table region and the picture region. In this way, for a subimage 3 and a subimage 4 that are obtained by segmenting the image 2, the subimage 3 includes the text region and the table region, and the subimage 4 includes only the picture region.

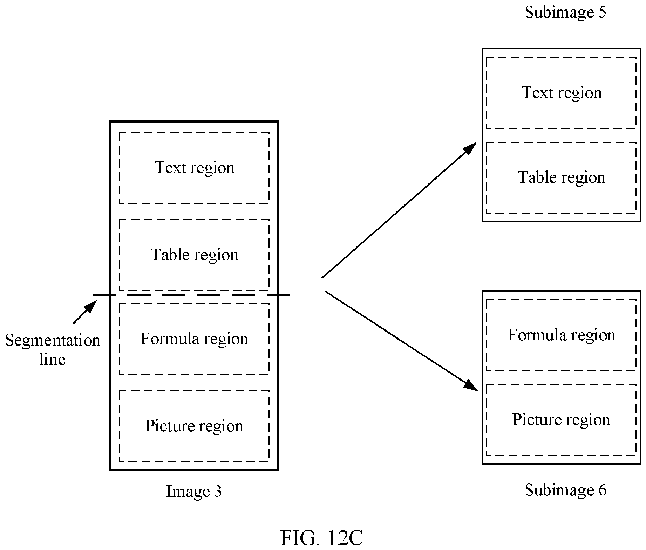

FIG. 12C is another diagram of performing segmentation at a border between different regions in an image according to an embodiment of this application. As shown in FIG. 12C, an image 3 includes a text region, a table region, a formula region, and a picture region, and a segmentation line for segmenting the image 3 is located at a border between the table region and the formula region. In this way, for a subimage 5 and a subimage 6 obtained by segmenting the image 3, the subimage 5 includes the text region and the table region, and the subimage 6 includes the formula region and the picture region.

In FIG. 12A to FIG. 12C, the image 1, the image 2, and the image 3 may correspond to the first image; the subimage 1, the subimage 3, and the subimage 5 may correspond to the foregoing first subimage; and the subimage 2, the subimage 4, and the subimage 6 may correspond to the foregoing second subimage.

Case 1.2: The subimage includes a plurality of non-adjacent regions in the first image.

For example, if the first image includes a first region, a second region, and a third region, the second region is located between the first region and the third region, a ratio of an area of the second region to an area of the first image is greater than or equal to a preset threshold, and the second region is a non-text region, the first subimage includes the first region and the third region, and the second subimage includes the second region. That is, for the first region, the second region, and the third region that are consecutive in the first image, the first region and the third region are distributed into one subimage through segmentation, and the second region in the middle is distributed into another subimage through segmentation.

It should be understood that, when the area of the second region between the first region and the third region is larger, if the first region and the second region are distributed into a same subimage through segmentation, and the third region is distributed into another subimage through segmentation, an area of the subimage including the first region and the second region is large, and an area of the subimage including the third region is small. Consequently, an area of a display that can effectively display projection content is small. Therefore, to ensure that the area of the display that can effectively display the projection content is as large as possible, during segmentation of the first image, it is ensured that areas of the plurality of subimages obtained through segmentation are as close as possible.

In view of this, in this embodiment, when the ratio of the area of the second region to the area of the first image is greater than or equal to the preset threshold, the second region is distributed into a separate subimage through segmentation, and the first region and the third region are distributed into another subimage through segmentation, to ensure that areas of the two subimages obtained through segmentation can be as close as possible.

A specific value of the preset threshold may be adjusted based on an actual requirement, and is not specifically limited. For example, when the actual requirement is that the content of the two subimages has a same order as the content of the first image as possible, the value of the preset threshold may be a large value. For example, the value of the preset threshold may be 60%. When the actual requirement is that areas of the two subimages are as equal as possible, the value of the preset threshold may be a small value. For example, the value of the preset threshold is 45%.

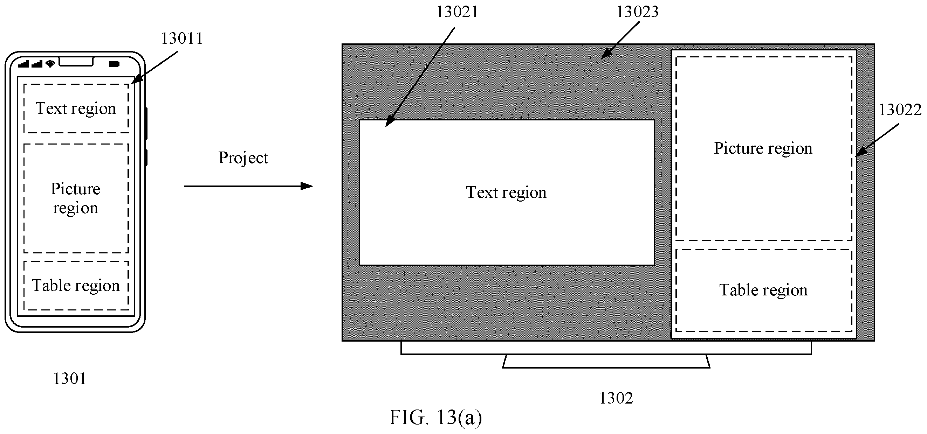

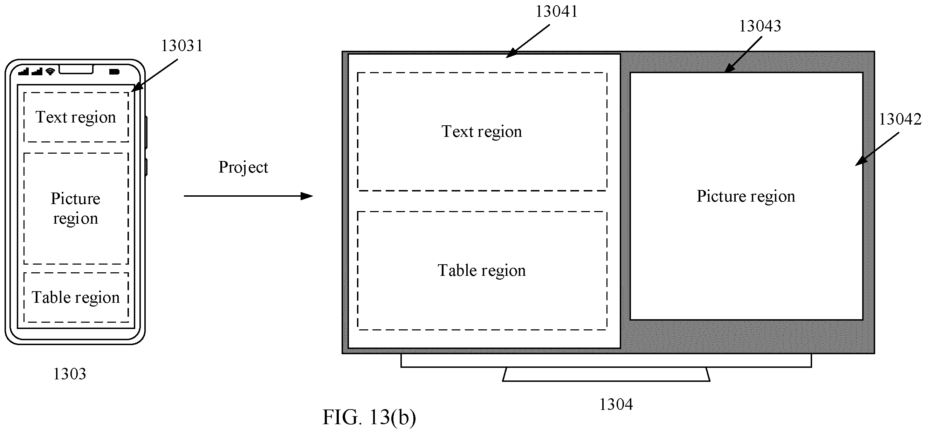

For example, FIG. 13(a) and FIG. 13(b) are diagrams of segmenting an image according to an embodiment of this application. As shown in FIG. 13(a), a projection terminal 1301 displays an image 13011, and the image 13011 includes a text region, a picture region, and a table region from top to bottom, where an area of the picture region is greater than a sum of areas of the text region and the table region. During projection, if a display terminal 1302 segments the image 13011 between the text region and the picture region, a subimage 13021 including only the text region and a subimage 13022 including the picture region and the table region are obtained. In this way, because both areas and width-height ratios of the subimage 13021 and the subimage 13022 differ greatly, when the display terminal 1302 displays the subimage 13021 and the subimage 13022 on a display, there is a large ineffective display region 13023 on the display, that is, there is a large area on the display that cannot display projection content.

As shown in FIG. 13(b), a projection terminal 1303 (corresponding to the second electronic device) displays an image 13031 (corresponding to the first image), and the image 13031 includes a text region, a picture region, and a table region from top to bottom, where an area of the picture region is greater than a sum of areas of the text region and the table region. During projection, a display terminal 1304 (corresponding to the first electronic device) segments the image 13031 between the text region and the picture region and between the picture region and the table region, and places the text region and the table region obtained through segmentation into a same subimage, and places the picture region into another subimage. Therefore, by segmenting the image 13031, a subimage 13041 including the text region and the table region, and a subimage 13042 including only the picture region are obtained. In this way, because both areas and width-height ratios of the subimage 13041 and the subimage 13042 are close, when the display terminal 1304 displays the subimage 13041 and the subimage 13042 on a display, there is a small ineffective display region 13043 on the display, that is, there is a large area on the display that can effectively display projection content.

Manner 2: A segmentation line of the first image is located in the text region in the first image, that is, a same text region in the first image is distributed into different subimages through segmentation.

Because the content of the text region is formed by one or more text lines, in this embodiment, the first image may be segmented between the text lines. In this way, the first image is segmented. Specifically, to avoid segmentation of text in a same text line, the segmentation line for segmenting the first image may be located between two adjacent text lines in the text region.

That is, when the text region in the first image includes a plurality of text lines, the first image may be segmented between two adjacent text lines in the text region, to obtain two subimages that respectively include a part of the text region.

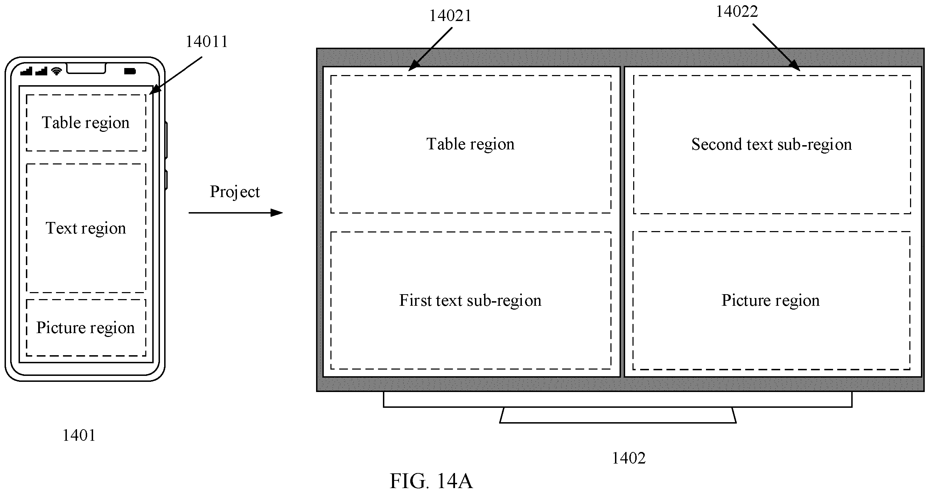

For example, refer to FIG. 14A. FIG. 14A is a diagram of projection after a text region is segmented according to an embodiment of this application. As shown in FIG. 14A, a projection terminal 1401 (corresponding to the second electronic device) displays an image 14011 (corresponding to the first image), and the image 14011 includes a table region, a text region, and a picture region from top to bottom. During projection process, a display terminal 1402 (corresponding to the first electronic device) segments the image 14011 in the text region, to segment the text region in the image 14011 into a first text sub-region and a second text sub-region. Then, the display terminal 1402 obtains a subimage 14021 that includes the table region and the first text sub-region and a subimage 14022 that includes the second text sub-region and the picture region, and displays the subimage 14021 and the subimage 14022 on a display.

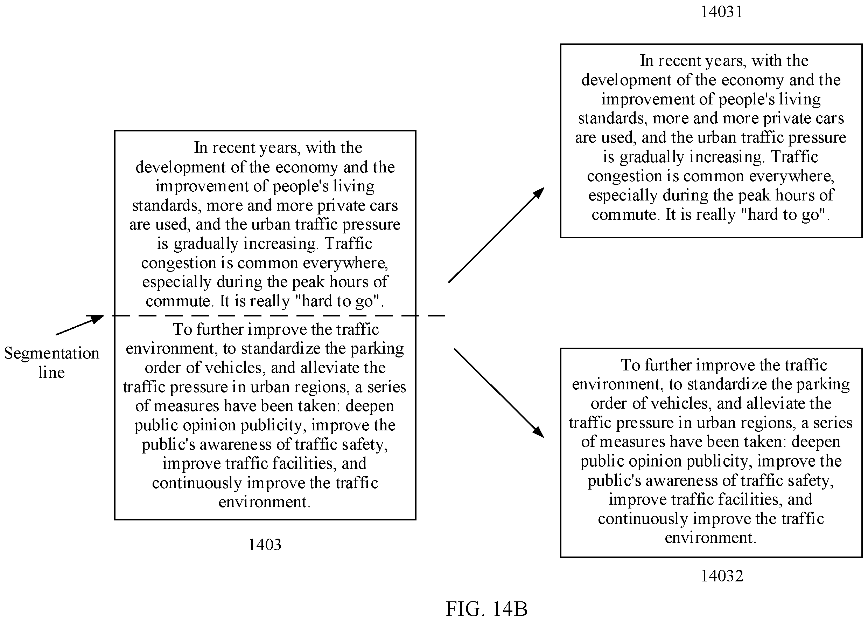

FIG. 14B is a diagram of segmenting a text region according to an embodiment of this application. As shown in FIG. 14B, for a text region 1403 in the image shown in FIG. 14A, the text region 1403 includes a plurality of text lines, and each text line includes one or more characters. In a process of segmenting the text region 1403, a segmentation line located between two adjacent text lines is first determined, and then the text region is segmented along the segmentation line to obtain a first text sub-region 14031 and a second text sub-region 14032. The first text sub-region 14031 includes a part of text content of the text region 1403, and the second text sub-region 14032 includes the other part of text content of the text region 1403.

Optionally, in some cases, after the text region is segmented, to ensure that the obtained plurality of subimages have close areas, the text region and other non-text regions in the image after segmentation may be re-typeset, so that areas of obtained subimages are close.

For example, after the first electronic device segments the text region in the first image, the text region is segmented into a first text sub-region and a second text sub-region. In addition, in addition to the text region, the first image further includes a fourth region and a fifth region, where the fourth region and the fifth region are non-text regions of different types. The text region in the first image is adjacent to the fourth region, and the text region is not adjacent to the fifth region. After the text region is segmented, the first electronic device re-typesets the first text sub-region, the second text sub-region, the fourth region, and the fifth region, and finally obtains the first subimage including the first text sub-region and the fourth region and the second subimage including the second text sub-region and the fifth region.

Simply speaking, when the first image includes the text region, the fourth region, and the fifth region that are sequentially arranged from top to bottom, the first electronic device may segment the text region at the upper part of the first image to separately obtain two text sub-regions, where one text sub-region and the fourth region form a subimage, and the other text sub-region and the fifth region form another subimage.

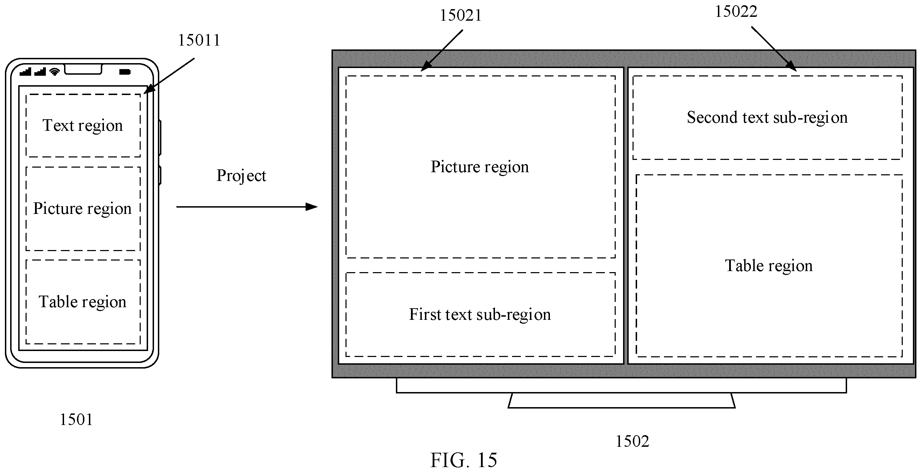

For example, refer to FIG. 15. FIG. 15 is another diagram of projection after a text region is segmented according to an embodiment of this application. As shown in FIG. 15, a projection terminal 1501 (corresponding to the second electronic device) displays an image 15011 (corresponding to the first image), and the image 15011 includes a text region, a picture region, and a table region from top to bottom. During projection process, a display terminal 1502 (corresponding to the first electronic device) segments the image 15011 in the text region, to segment the text region in the image 15011 into a first text sub-region and a second text sub-region. In addition, a display terminal 1502 re-typesets the segmented image 15011, to distribute the picture region and the first text sub-region that are obtained through segmentation into a subimage 15021, and distribute the second text sub-region and the table region that are obtained through segmentation into a subimage 15022. Finally, the display terminal 1502 displays, side by side on a display, the subimage 15021 including the picture region and the first text sub-region and the subimage 15022 including the second text sub-region and the table region.

The foregoing describes the specific manners of segmenting the image. For ease of understanding, the following describes in detail a specific procedure of recognizing and segmenting the image based on a specific example.

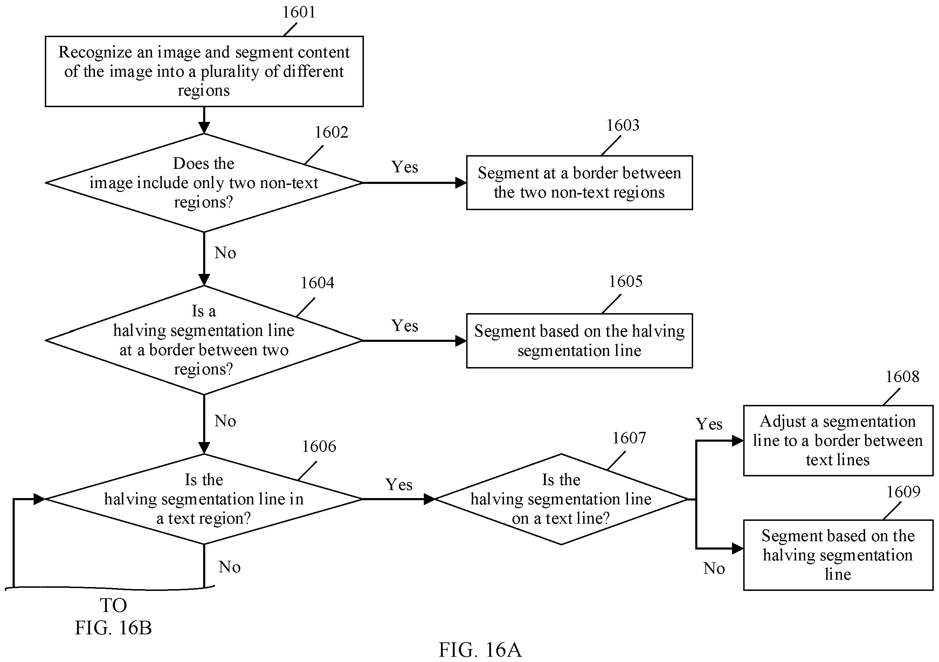

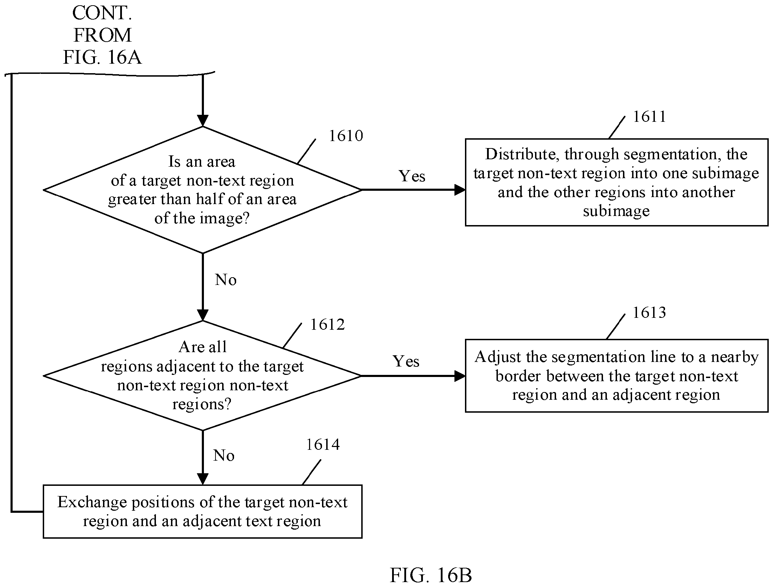

FIG. 16A and FIG. 16B are a schematic flowchart of image recognition and segmentation according to an embodiment of this application. As shown in FIG. 16A and FIG. 16B, a procedure of recognizing and segmenting an image includes steps 1601 to 1614.

Step 1601: Recognize a to-be-projected image, and segment content of the to-be-projected image into a plurality of different regions.

In this embodiment, a processing device obtains the to-be-projected image, and recognizes and segments the to-be-projected image, to obtain a plurality of subimages through segmentation. The processing device may be the first electronic device (namely, the display terminal), and the to-be-projected image may be the first image. The processing device may alternatively be another device that performs segmentation processing on the to-be-projected image. For example, when a projection terminal needs to send a segmented subimage to a display terminal, the processing device may be the projection terminal. A specific form of the processing device is not limited in this embodiment.

After the processing device obtains the to-be-projected image, the processing device recognizes the content of the to-be-projected image by using a conventional algorithm like a target detection algorithm or a semantic segmentation algorithm or by using a deep learning method, to segment the to-be-projected image into a plurality of different regions based on the content of the to-be-projected image. For example, the processing device segments the to-be-projected image into a text region, a title region, a picture region, a formula region, or a table region.

Step 1602: Determine whether the to-be-projected image includes only two non-text regions.

After obtaining the plurality of regions in the to-be-projected image through segmentation, the processing device determines whether the to-be-projected image includes only two different types of non-text regions. For example, the to-be-projected image includes only a table region and a picture region, or the to-be-projected image includes only a picture region and a formula region.

Step 1603: If the to-be-projected image includes only two non-text regions, segment the to-be-projected image at a border between the two non-text regions.

When the to-be-projected image includes only two non-text regions, to ensure continuity of content of the non-text regions, segmentation is not allowed in a same non-text region. Therefore, the processing device segments the to-be-projected image at the border of the two non-text regions to obtain two subimages, where each of the two subimages includes a non-text region.

Step 1604: If the to-be-projected image does not include only two non-text regions, determine whether a halving segmentation line of an image height is at a border between two regions in the to-be-projected image.

The halving segmentation line of the image height is a halving segmentation line of the to-be-projected image in a height direction. The to-be-projected image can be segmented into two subimages based on the halving segmentation line. The two subimages have a same width and a height that is half of a height of the to-be-projected image.

Step 1605: If the halving segmentation line of the image height is at the border between the two regions in the to-be-projected image, segment the to-be-projected image based on the halving segmentation line.

For example, refer to FIG. 9. In FIG. 9, the image 9011 includes the text region, the table region, the formula region, and the picture region that are sequentially arranged from top to bottom. A halving segmentation line of the image 9011 is at a border between the table region and the formula region. The image 9011 is segmented based on the halving segmentation line to obtain the subimage 9021 including the text region and the table region and the subimage 9022 including the formula region and the picture region.

Step 1606: If the halving segmentation line of the image height is not at the border between the two regions in the to-be-projected image, determine whether the halving segmentation line of the image height is in the text region of the to-be-projected image.

Step 1607: If the halving segmentation line of the image height is in the text region of the to-be-projected image, continue to determine whether the halving segmentation line is on a text line.

Step 1608: If the halving segmentation line is on the text line, adjust a segmentation line of the to-be-projected image to a border between text lines.

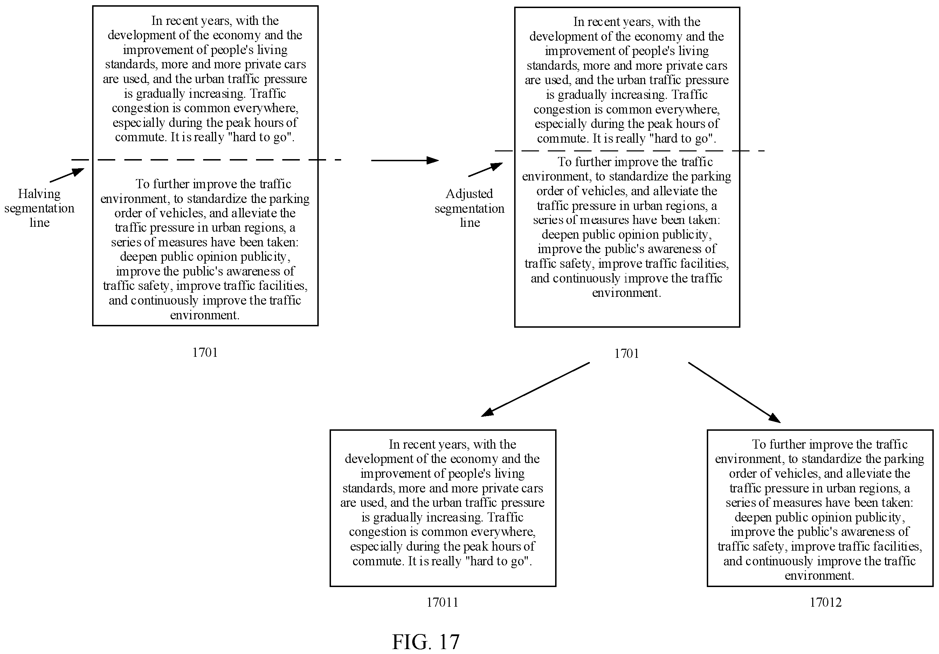

For example, refer to FIG. 17. FIG. 17 is a diagram of adjusting an image segmentation line according to an embodiment of this application. As shown in FIG. 17, a halving segmentation line of an image 1701 is on a text line in a text region of the image 1701, that is, the halving segmentation line overlaps characters in the text line. Based on a position of the halving segmentation line, a segmentation line for segmenting the image 1701 is adjusted to a border between the text line that the halving segmentation line passes through and an adjacent text line, to obtain the adjusted segmentation line. The image 1701 is segmented based on the adjusted segmentation line, so that a subimage 17011 and a subimage 17012 can be obtained. Characters in text lines in the subimage 17011 and the subimage 17012 are not segmented.

Step 1609: If the halving segmentation line is not on the text line, segment the to-be-projected image based on the halving segmentation line.

If the halving segmentation line is in the text region of the to-be-projected image and the halving segmentation line is not on a text line, it indicates that the halving segmentation line is between text lines. Therefore, the processing device can segment the to-be-projected image based on the halving segmentation line.

Step 1610: If the halving segmentation line of the image height is not in the text region of the to-be-projected image, continue to determine whether an area of a target non-text region in which the halving segmentation line is located is greater than half of an area of the image.

If the halving segmentation line of the image height is not in the text region of the to-be-projected image, it indicates that the halving segmentation line is in the non-text region. The target non-text region is a non-text region in which the halving segmentation line is located.

Step 1611: If the area of the target non-text region in which the halving segmentation line is located is greater than half of the area of the image, distribute, through segmentation, the target non-text region in the to-be-projected image into one subimage and the other regions in the to-be-projected image into another subimage.

When the area of the target non-text region in which the halving segmentation line is located is greater than half of the area of the image, it may be determined that a sum of areas of all the regions other than the target non-text region in the image is less than half of the area of the image. Therefore, to ensure that areas of the two subimages obtained through segmentation can be as close as possible, the processing device may distribute, through segmentation, the target non-text region into one subimage and the regions other than the target non-text region in the to-be-projected image into another subimage.

For example, as shown in FIG. 13(b), the halving segmentation line in the image 13031 passes through the picture region, and the area of the picture region is greater than half of the area of the image 13031. Therefore, the projection terminal 1304 distributes the picture region into the subimage 13042 through segmentation, and distributes the remaining text region and table region into the subimage 13041 through segmentation.

Step 1612: If the area of the target non-text region in which the halving segmentation line is located is not greater than half of the area of the image, continue to determine whether all regions adjacent to the target non-text region are non-text regions.

Step 1613: If all the regions adjacent to the target non-text region are the non-text regions, adjust the segmentation line for segmenting the to-be-projected image to a nearby border between the target non-text region and an adjacent region.

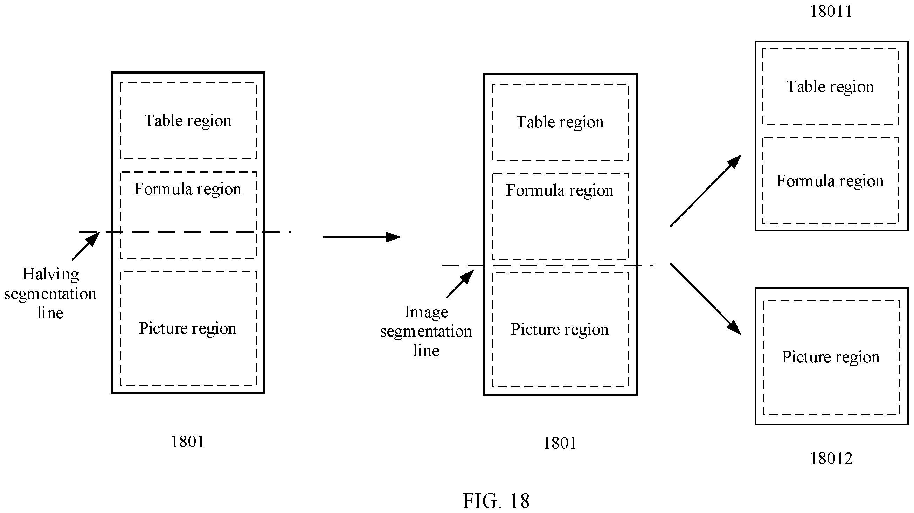

For example, refer to FIG. 18. FIG. 18 is a diagram of adjusting an image segmentation line and segmenting an image according to an embodiment of this application. As shown in FIG. 18, an image 1801 sequentially includes a table region, a formula region, and a picture region from top to bottom. A height halving segmentation line on the image 1801 is located in the formula region, and all regions adjacent to the formula region are non-text regions. In this case, the processing device adjusts the image segmentation line to a border between the formula region and an adjacent region, that is, a border between the formula region and the picture region. The processing device segments the image 1801 based on the adjusted image segmentation line, to obtain a subimage 18011 including the table region and the formula region and a subimage 18012 including the picture region.

Step 1614: If not all regions adjacent to the target non-text region are the non-text regions, the processing device jumps to perform step 1606 until the to-be-projected image is successfully segmented.

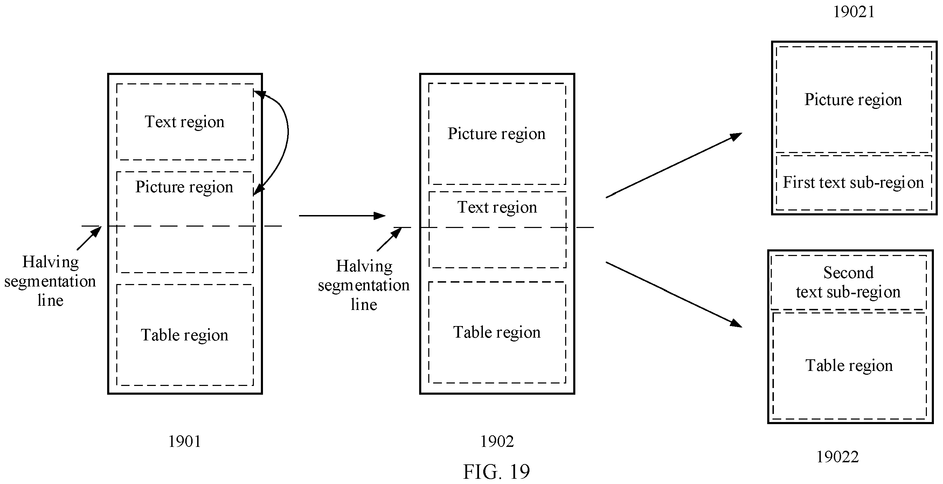

For example, refer to FIG. 19. FIG. 19 is a diagram of segmenting an image after region adjustment is performed on the image according to an embodiment of this application. As shown in FIG. 19, an image 1901 sequentially includes a text region, a picture region, and a table region from top to bottom. A height halving segmentation line on the image 1901 is located in the picture region, and the formula region has an adjacent text region. In view of this, position exchange is performed on the picture region and the text region in the image 1901, to obtain an image 1902. In the image 1902, the height halving segmentation line on the image 1902 is located in the text region. Therefore, steps 1606 to 1608 are performed on the image 1902, to segment the text region into a first text sub-region and a second text sub-region. Finally, the image 1902 is segmented into a subimage 19021 including the picture region and the first text sub-region and a subimage 19022 including the second text sub-region and the table region.

The foregoing describes the specific process in which the display terminal segments and displays the to-be-projected image after obtaining the to-be-projected image. In most cases, in a process in which the display terminal displays the projection content, a user usually needs to switch the projection content based on a requirement. For example, when the display terminal displays a page in a document, the user switches to a next page in the document according to a progress of a speech or a conference.

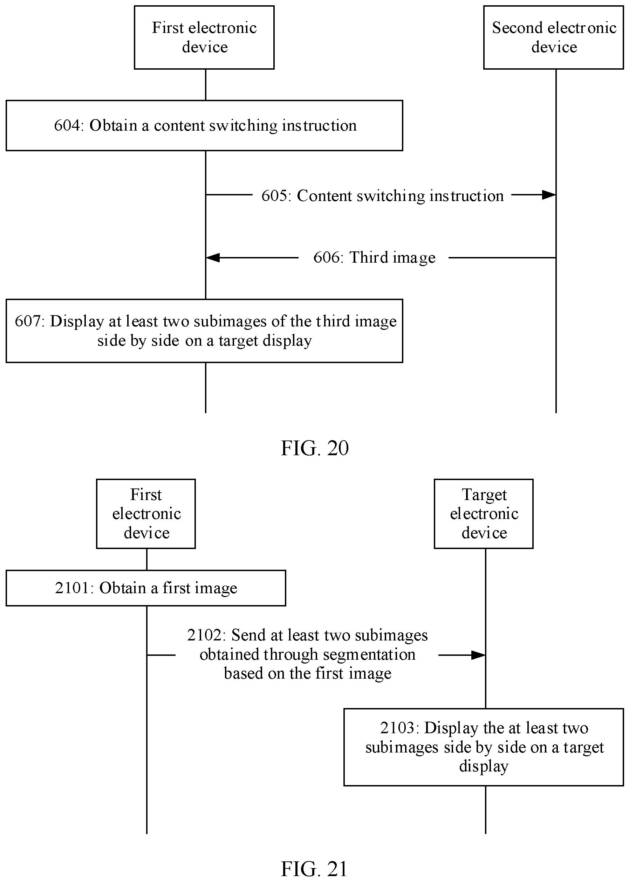

In view of this, an embodiment of this application further provides a projection method in which adjustment of projection content can be triggered from a display terminal. Specifically, refer to FIG. 20. FIG. 20 is a schematic flowchart of a projection method according to an embodiment of this application. As shown in FIG. 20, in the embodiment corresponding to FIG. 6, steps 604 to 607 are further included.

Step 604: The first electronic device obtains a content switching instruction, where the content switching instruction instructs switching content displayed on the target display.

In this embodiment, the first electronic device obtains the content switching instruction in a plurality of manners.

In a possible implementation, when the target display is deployed on the first electronic device, the first electronic device may obtain the content switching instruction that is triggered by a user on the target display by using a touch gesture or the like. For example, when the user touches a page up/down button on the target display, or slides a page by using a gesture, the first electronic device can obtain the content switching instruction.

In another possible implementation, when the target display and the first electronic device are separately deployed, and the first electronic device is connected to the target display, the first electronic device obtains the content switching instruction sent by the target display. The content switching instruction may alternatively be triggered by the user on the target display by using a touch gesture or the like.

That is, the target display may include a first sub-display and a second sub-display that are separately connected to the first electronic device. The content switching instruction is from the first sub-display or the second sub-display.

In still another possible implementation, the first electronic device is connected to a control device, and the first electronic device receives the content switching instruction sent by the control device. The control device is configured to send, to the first electronic device, a device that controls the first electronic device to perform a corresponding operation. For example, it is assumed that the first electronic device is a smart television, the control device is a remote control of the smart television, and the smart television is wirelessly connected to the remote control. The user presses a page up/down button on the remote control, to trigger the remote control to send a content switching instruction to the smart television, so as to instruct the smart television to switch currently displayed content.

Step 605: The first electronic device sends the content switching instruction to the second electronic device.

Because the second electronic device is a projection terminal that sends projection content to the first electronic device, the first electronic device feeds back the content switching instruction to the second electronic device.

Step 606: The first electronic device receives a third image from the second electronic device, where a width of the third image is less than a height of the third image.

After the second electronic device receives the content switching instruction, the second electronic device determines corresponding projection content according to an instruction of the content switching instruction, and sends the projection content to the first electronic device. In this way, the first electronic device can receive the third image from the second electronic device, and content of the third image is projection content obtained in response to the content switching instruction. In addition, an image format of the third image may be the same as an image format of the first image, that is, the width of the third image is less than the height of the third image.

Step 607: The first electronic device displays at least two subimages of the third image side by side on the target display, where the content of the third image can be obtained based on content of the at least two subimages of the third image, and a height of any one of the at least two subimages of the third image is less than the height of the third image.

In this embodiment, step 607 is similar to step 603. For details, refer to step 603. Details are not described herein again.

The foregoing embodiments describe, from a perspective of the display terminal, a process in which the display terminal segments and displays the to-be-projected image after receiving the to-be-projected image. In some scenarios, a procedure of segmenting the to-be-projected image may alternatively be deployed on another terminal. The following embodiment describes a specific procedure of performing image segmentation by another terminal other than the display terminal.

FIG. 21 is a schematic flowchart of another projection method according to an embodiment of this application. As shown in FIG. 21, the projection method provided in this embodiment includes steps 2101 to 2103.

Step 2101: A first electronic device obtains a first image, where the first image is an image to be projected onto a target display for display, and a width of the first image is less than a height of the image.

In this embodiment, the first electronic device may be an electronic device that generates and sends projection content, that is, the first electronic device is a projection terminal.

Optionally, the first electronic device may alternatively be an electronic device connected between the projection terminal and a display terminal, that is, the first electronic device is responsible for receiving to-be-projected content from the projection terminal and forwarding the to-be-projected content to the display terminal. For example, the first electronic device receives the first image from a fourth electronic device, where the fourth electronic device is a device for generating the first image. In other words, the fourth electronic device is the projection terminal responsible for generating the projection content, and the first electronic device is a terminal responsible for forwarding the projection content.

Step 2102: The first electronic device sends a second image or at least two subimages to a target electronic device based on the first image.

In this embodiment, the second image includes at least two subimages arranged side by side. In other words, the first electronic device can obtain the at least two subimages based on the first image. The first electronic device may send the obtained at least two subimages to the target electronic device. Alternatively, the first electronic device may arrange the at least two subimages side by side to obtain the second image, and then send the second image to the target electronic device.

For ease of description, the following describes this embodiment by using an example in which the at least two subimages include a first subimage and a second subimage. The first subimage and the second subimage are obtained by the first electronic device by segmenting the first image. Specifically, the first subimage and the second subimage are obtained by segmenting the first image in a width direction of the first image, both a height of the first subimage and a height of the second subimage are less than the height of the first image, and a width of the target display is greater than a height of the target display. A process in which the first electronic device segments the first image to obtain the first subimage and the second subimage is similar to that in the embodiment corresponding to FIG. 6. For details, refer to the embodiment corresponding to FIG. 6. Details are not described herein again.

In addition, the first subimage and the second subimage are displayed side by side on the target display of the target electronic device. For example, when sending the first subimage and the second subimage to the target electronic device, the first electronic device may send indication information to the target electronic device at the same time, where the indication information indicates to display the first subimage and the second subimage side by side.

Step 2103: The target electronic device displays the at least two subimages side by side on the target display.

In an implementation, the target display includes only one display connected to the target electronic device. The first subimage and the second subimage are configured to be displayed side by side on the target display of the target electronic device in a width direction of the target display. Alternatively, when the target electronic device receives the second image including the first subimage and the second subimage that are arranged side by side, the target electronic device displays the second image on the target display, so that the first subimage and the second subimage can be displayed side by side.

In another implementation, the target electronic device includes a second electronic device and a third electronic device, and the target display includes a first sub-display and a second sub-display. The second electronic device is connected to the first sub-display, and the third electronic device is connected to the second sub-display. The second electronic device receives the first subimage sent by the first electronic device, and displays the first subimage on the first sub-display. The third electronic device receives the second subimage sent by the first electronic device, and displays the second subimage on the second sub-display.

In another implementation, the target display includes a first sub-display and a second sub-display, and the target electronic device is separately connected to the first sub-display and the second sub-display. The target electronic device outputs the first subimage to the first sub-display for display, and outputs the second subimage to the second sub-display for display.

Optionally, in a scenario in which the user needs to switch the projection content, the first electronic device receives a content switching instruction from the target electronic device, where the content switching instruction instructs switching content displayed on the target display. Then, the first electronic device obtains the second image according to the content switching instruction, where content of the second image is to-be-projected content, and a width of the second image is less than a height of the second image. The first electronic device sends a third subimage and a fourth subimage to the target electronic device based on the second image, where the third subimage and the fourth subimage are displayed side by side on the target display of the target electronic device, and the third subimage and the fourth subimage are obtained by segmenting the second image in the width direction of the second image. A process in which the first electronic device segments the second image to obtain the third subimage and the fourth subimage is similar to step 2102. For details, refer to step 2102. Details are not described herein again.

For ease of understanding the embodiment corresponding to FIG. 21, the following describes in detail the projection method in the embodiment corresponding to FIG. 21 by using a specific example.

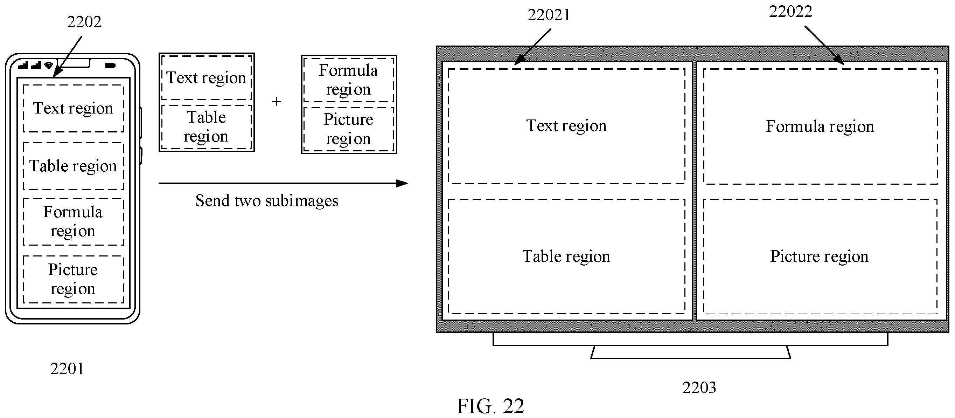

FIG. 22 is a diagram of sending a plurality of subimages to a display terminal by a projection terminal according to an embodiment of this application. As shown in FIG. 22, a projection terminal 2201 (corresponding to the first electronic device in the embodiment in FIG. 21) obtains a to-be-projected image 2202 (corresponding to the first image in the embodiment in FIG. 21). The image 2202 includes a text region, a table region, a formula region, and a picture region that are arranged from top to bottom. Then, the projection terminal 2201 segments the image 2202 into a subimage 22021 and a subimage 22022, and sends the subimage 22021 and the subimage 22022 to a display terminal 2203 (corresponding to the target electronic device in the embodiment in FIG. 21). The subimage 22021 includes the text region and the table region, and the subimage 22022 includes the formula region and the picture region. In this way, the display terminal 2203 displays the subimage 22021 and the subimage 22022 side by side on a display.

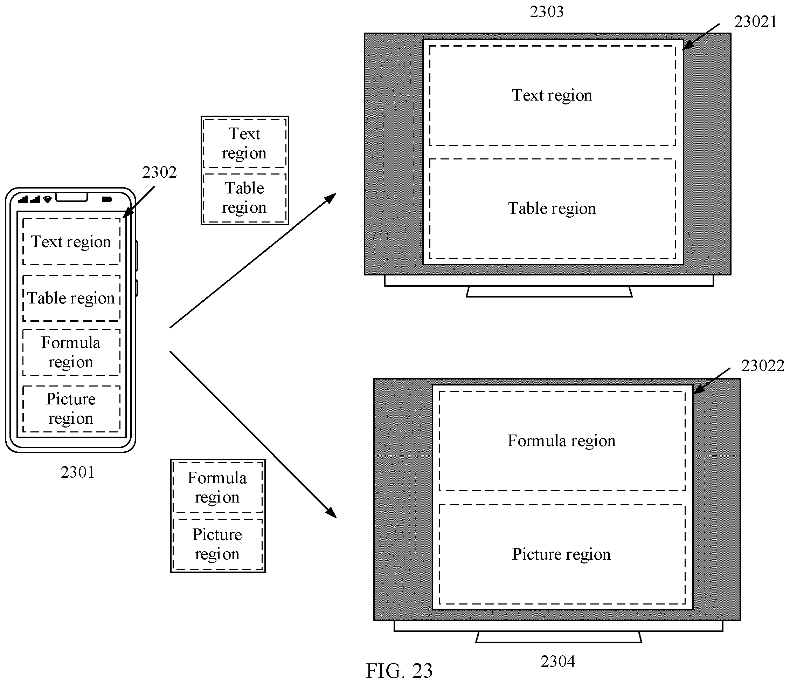

FIG. 23 is a diagram of sending subimages to a plurality of display terminals by a projection terminal according to an embodiment of this application. As shown in FIG. 23, a projection terminal 2301 (corresponding to the first electronic device in the embodiment in FIG. 21) obtains a to-be-projected image 2302 (corresponding to the first image in the embodiment in FIG. 21). Then, the projection terminal 2301 segments the image 2302 into a subimage 23021 and a subimage 23022, sends the subimage 23021 to a display terminal 2303 (corresponding to the second electronic device in the embodiment in FIG. 21), and sends the subimage 23022 to a display terminal 2304 (corresponding to the third electronic device in the embodiment in FIG. 21). In this way, the display terminal 2303 displays the subimage 23021 on a display, and the display terminal 2304 displays the subimage 23022 on a display, so that the subimage 23021 and the subimage 23022 are displayed side by side.

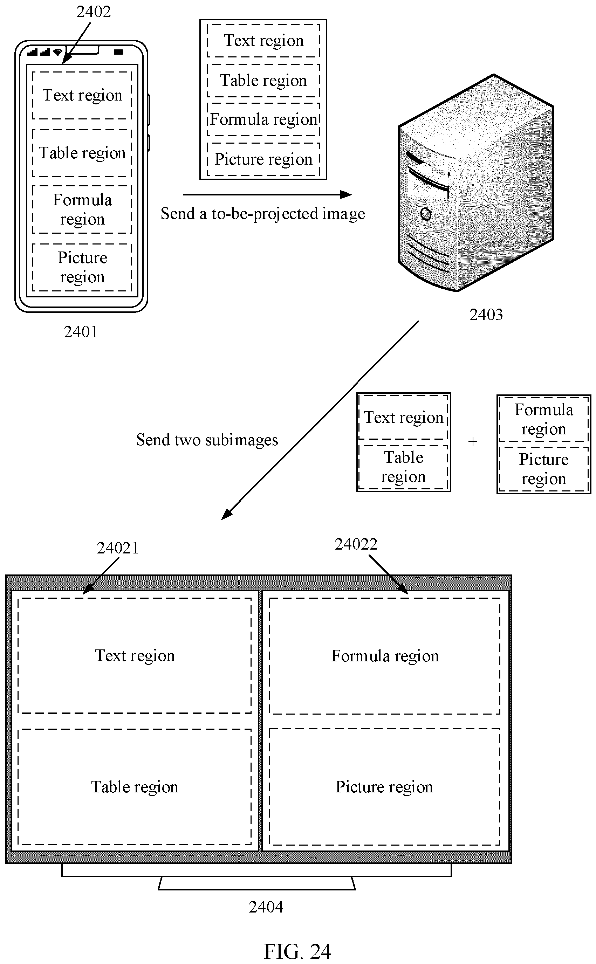

FIG. 24 is a diagram of sending subimages to a display terminal by a forwarding terminal according to an embodiment of this application. As shown in FIG. 24, a projection terminal 2401 (corresponding to the fourth electronic device in the embodiment in FIG. 21) obtains a to-be-projected image 2402 (corresponding to the first image in the embodiment in FIG. 21). Then, the projection terminal 2401 sends the image 2402 to a forwarding terminal 2403 (corresponding to the first electronic device in the embodiment in FIG. 21). The forwarding terminal 2403 segments the image 2402 into a subimage 24021 and a subimage 24022, and sends the subimage 24021 and the subimage 24022 to a display terminal 2303 (corresponding to the target electronic device in the embodiment in FIG. 21). In this way, the display terminal 2303 displays the subimage 24021 and the subimage 24022 side by side on a display.

The foregoing embodiments describe the process of segmenting the to-be-projected image into the plurality of subimages for projection display. The following describes a specific process of re-typesetting content of the to-be-projected image to increase an area of a display that effectively displays projection content.

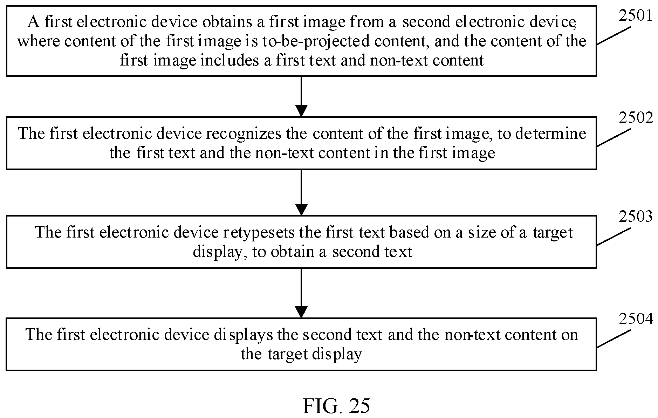

FIG. 25 is a schematic flowchart of another projection method according to an embodiment of this application. As shown in FIG. 25, the projection method provided in this embodiment includes steps 2501 to 2054.

Step 2501: A first electronic device obtains a first image from a second electronic device, where content of the first image is to-be-projected content, a width of the first image is less than a height of the first image, and the content of the first image includes a first text and non-text content.

In this embodiment, the first electronic device is an electronic device that receives and displays projection content, and the second electronic device is an electronic device that generates and sends the projection content. That is, the first electronic device is a display terminal, and the second electronic device is a projection terminal.

The content of the first image is vertically typeset content, for example, a vertically typeset document. Therefore, the width of the first image is less than the height of the first image. In addition, the content of the first image includes the first text and the non-text content. The non-text content of the first image is, for example, content such as a picture, a formula, or a table.

Step 2502: The first electronic device recognizes content of the first image, to determine the first text and the non-text content of the first image.

For example, the first electronic device may recognize the content of the first image by using a conventional algorithm like a target detection algorithm or a semantic segmentation algorithm or by using a deep learning method, to determine the first text and the non-text content of the first image.

Step 2503: The first electronic device re-typesets the first text based on a size of a target display, to obtain a second text.

After determining the first text in the first image, the first electronic device may recognize characters in the first text in the first image by using a text recognition method. For example, the first electronic device recognizes the characters in the first text by using an optical character recognition (optical character recognition, OCR) method, to obtain a recognition result. After obtaining character content of the first text through recognition, the first electronic device re-typesets the first text based on the size of the target display, namely, the width and the height of the target display, to obtain the second text.

Because the first text is vertically typeset, and the target display is in landscape mode, after the first text is re-typeset, text content of the second text is the same as text content of the first text, but a quantity of text lines in the second text is less than a quantity of text lines in the first text. That is, a quantity of characters in a text line in the second text is greater than a quantity of characters in a text line in the first text. For example, before the re-typesetting, the first text includes 20 text lines, and a maximum quantity of characters in each text line is 40; and after the first text is re-typeset, the obtained second text includes only 10 text lines, and a maximum quantity of characters in each text line is 80.

By re-typesetting the first text, for a feature that the width of the target display is greater than the height, space occupied by the text content in a height direction can be effectively reduced, and space occupied by the text content in a width direction can be increased, so that the typed second text is more suitable for being displayed on the target display.

Step 2504: The first electronic device displays the second text and the non-text content on the target display.

After the second text is obtained through the typesetting, the first electronic device replaces the first text in the first image with the second text, and displays the second text and other non-text content of the first image on the target display.

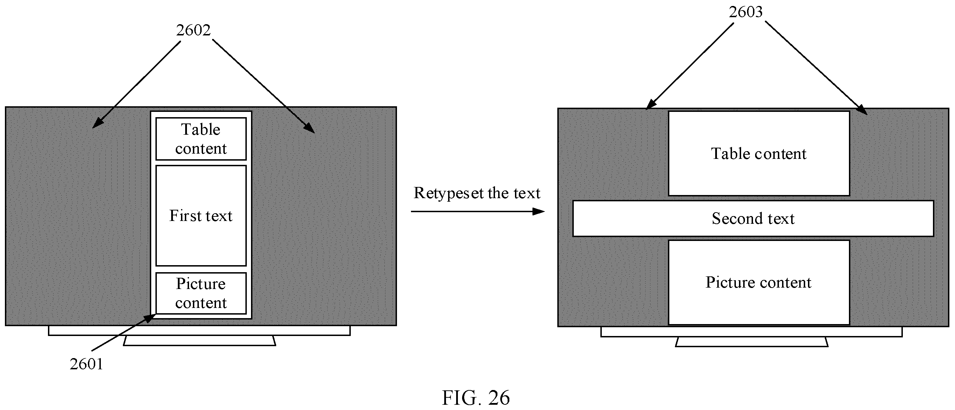

For example, refer to FIG. 26. FIG. 26 is a diagram of projection display after projection content is re-typeset according to an embodiment of this application. As shown in FIG. 26, before the projection content is re-typeset, an image 2601 including table content, first text, and picture content is displayed on a display. The image 2601 is vertically typeset, and the display is in landscape mode. Therefore, to completely display the entire image 2601 on the display, there are relatively large ineffective display regions 2602 on the left and right sides of the display in a width direction. After the first text in the image 2601 is re-typeset, a second text with fewer text lines and more characters in the text lines is obtained, that is, a height of the second text is less than a height of the first text, and a width of the second text is greater than a width of the first text. In this case, because the height of the second text is reduced, more space can be reserved on the display in a height direction to display other non-text content (namely, the table content and the picture content). As shown in FIG. 26, after the first text is re-typeset, both the table content and the picture content displayed on the display are zoomed in to a specific proportion, thereby effectively reducing an ineffective display region 2603 on the entire display, and increasing an area of the display that effectively displays the projection content.

The foregoing mainly describes the solutions provided in embodiments of this application from a perspective of methods. It may be understood that, to implement the foregoing functions, the electronic device includes a corresponding hardware structure and/or software module for performing each of the functions. A person skilled in the art should easily be aware that, in combination with modules and algorithm steps of the examples described in embodiments disclosed in this specification, this application may be implemented in a hardware form or in a form of combining hardware with computer software. Whether a function is performed in a manner of hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into function modules based on the foregoing method examples. For example, each function module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. During actual implementation, another division manner may be used.

The following describes in detail the electronic device in embodiments of this application.

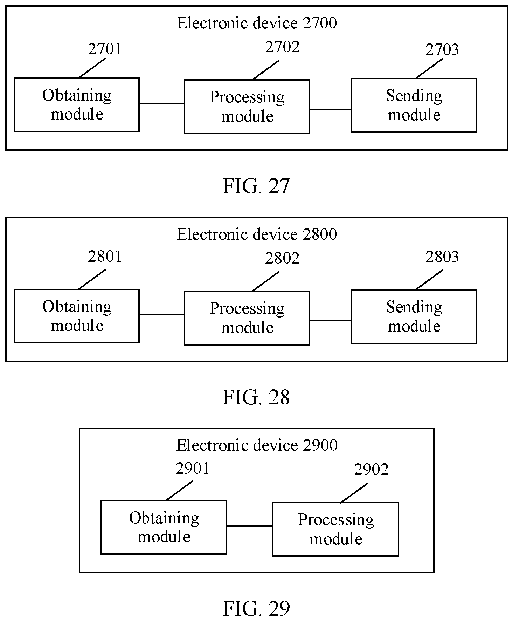

FIG. 27 is a diagram of a structure of an electronic device 2700 according to an embodiment of this application. As shown in FIG. 27, the electronic device 2700 includes: an obtaining module 2701, configured to obtain a first image, where the first image is an image to be projected onto a target display for display, a width of the first image is less than a height of the first image, and a width of the target display is greater than a height of the target display; and a processing module 2702, configured to obtain at least two subimages based on the first image, where the at least two subimages are displayed side by side on the target display, content of the first image can be obtained from content of the at least two subimages, and a height of any one of the at least two subimages is less than the height of the first image.

In a possible implementation, the target display is connected to a second electronic device, and the electronic device 2700 further includes: a sending module 2703, configured to send a second image to the second electronic device, where the second image includes the at least two subimages arranged side by side.

In a possible implementation, the electronic device 2700 includes the target display; and the processing module 2702 is configured to display the at least two subimages side by side via the target display.

FIG. 28 is a diagram of a structure of an electronic device 2800 according to an embodiment of this application. As shown in FIG. 28, the electronic device 2800 includes: an obtaining module 2801, configured to obtain a first image, where the first image is an image to be projected onto a target display for display, a width of the first image is less than a height of the first image, and the target display includes at least two sub-displays; and a processing module 2802, configured to obtain at least two subimages based on the first image, where the at least two subimages are separately displayed on the at least two sub-displays, content of the first image can be obtained from content of the at least two subimages, and a height of any one of the at least two subimages is less than the height of the first image.

In a possible implementation, the target display is connected to a second electronic device, and the electronic device 2800 further includes: a sending module 2803, configured to send the at least two subimages to the second electronic device.

In a possible implementation, the at least two subimages include a first subimage and a second subimage, the at least two sub-displays include a first sub-display and a second sub-display, the electronic device includes the first sub-display, and the electronic device is connected to the second sub-display. The processing module 2802 is configured to display the first subimage via the first sub-display. The electronic device 2800 further includes: a sending module 2803, configured to output the second subimage to the second sub-display for display.

In a possible implementation, the obtaining module 2801 is configured to capture screen content of a first electronic device to obtain the first image.

In a possible implementation, the obtaining module 2801 is configured to receive the first image from a third electronic device, where the first image is obtained by capturing screen content of the third electronic device.

In a possible implementation, the at least two subimages include the first subimage and the second subimage.

In a possible implementation, if the first image includes a first region and a second region, and a content type of the first region is different from a content type of the second region, the first subimage includes the first region, and the second subimage includes the second region.

In a possible implementation, the first subimage and the second subimage are obtained by segmenting the first image in a width direction of the first image, and a segmentation line for segmenting the first image is located at a border between the first region and the second region.

In a possible implementation, if the first image includes a first region, a second region, and a third region, the second region is located between the first region and the third region, a ratio of an area of the second region to an area of the first image is greater than or equal to a preset threshold, and the second region is a non-text region, the first subimage includes the first region and the third region, and the second subimage includes the second region.

In a possible implementation, the first image includes a text region, the first subimage includes a first text sub-region in the text region, and the second subimage includes a second text sub-region in the text region.

In a possible implementation, the first subimage and the second subimage are obtained by segmenting the first image in a width direction of the first image, and a segmentation line for segmenting the first image is located between two adjacent text lines in the text region.

In a possible implementation, a height of the first subimage is the same as a height of the second subimage.

In a possible implementation, the obtaining module 2801 is further configured to obtain a content switching instruction, where the content switching instruction instructs switching content displayed on the target display; the obtaining module 2801 is further configured to obtain a second image in response to the content switching instruction, where a width of the second image is less than a height of the second image; and the processing module 2802 is further configured to obtain at least two subimages of the second image, where the at least two subimages of the second image are displayed on the target display, content of the second image can be obtained from content of the at least two subimages of the second image, and a height of any one of the at least two subimages of the second image is less than the height of the second image.

FIG. 29 is a diagram of a structure of an electronic device 2900 according to an embodiment of this application. As shown in FIG. 29, the electronic device 2900 includes: an obtaining module 2901, configured to obtain a first image, where the first image is an image to be projected onto a target display for display, a width of the first image is less than a height of the first image, content of the first image includes a first text, and a width of the target display is greater than a height of the target display; and a processing module 2902, configured to obtain, based on the first image, a second text displayed on the target display, where text content of the second text is the same as text content of the first text, and a quantity of text lines in the second text is less than a quantity of text lines in the first text.

In a possible implementation, the content of the first image further includes non-text content; and the processing module 2902 is configured to obtain a second image based on the first image, where the second image includes the second text and the non-text content, a width of the second image is greater than a width of the first image, and a height of the second image is less than the height of the first image.

It should be noted that content such as information exchange and an execution process between units/components of the electronic device is based on a same concept as the method embodiments corresponding to FIG. 6 to FIG. 26 in this application. For specific content, refer to the descriptions in the foregoing method embodiments of this application. Details are not described herein again.

It should be noted that, for a specific implementation of the electronic device and beneficial effects brought by the electronic device, refer to the descriptions in the method embodiments corresponding to FIG. 6 to FIG. 26. Details are not described herein again.

An embodiment of this application further provides a projection system, including the electronic device in the embodiments corresponding to FIG. 27 to FIG. 29 and a target display.

An embodiment of this application further provides a computer-readable storage medium, including instructions. When the instructions are run on a computer, the computer controls an electronic device to perform any implementation described in the foregoing method embodiments.

An embodiment of this application further provides a computer program product. The computer program product includes computer program code. When the computer program code is run on a computer, the computer is enabled to perform any one of the implementations shown in the foregoing method embodiments.

An embodiment of this application further provides a chip system, including a memory and a processor. The memory is configured to store a computer program, and the processor is configured to invoke the computer program from the memory and run the computer program, to enable a chip to perform any implementation described in the foregoing method embodiments.

In addition, it should be noted that the described apparatus embodiments are merely examples. The units described as separate components may or may not be physically separate, and components displayed as units may or may not be physical units, in other words, may be located in one position, or may be distributed on a plurality of network units. A part or all of the modules may be selected based on actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, for this application, a software program implementation is a better implementation in most cases. Based on such an understanding, the technical solutions of this application essentially or the part contributing to the conventional technology may be implemented in a form of a software product. The computer software product is stored in a readable storage medium, for example, a computer floppy disk, a USB flash drive, a removable hard disk, a ROM, a RAM, a magnetic disk, or an optical disc, and includes several instructions for instructing a computer device to perform the methods described in embodiments of this application.

All or some of the foregoing embodiments may be implemented by software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether functions are performed in a hardware or software manner depends on particular applications and design constraint conditions of the technical solutions. A person skilled in the art may use different methods to implement the described functions for each particular application, but it should not be considered that the implementation goes beyond the scope of this application.

## Claims

1. A projection method, comprising:
obtaining, by a first electronic device, a first image, wherein the first image is an image to be projected onto a target display for display, a width of the first image is less than a height of the first image, and a width of the target display is greater than a height of the target display; and
obtaining, by the first electronic device, at least two subimages based on the first image, wherein the at least two subimages are displayed side by side on the target display, content of the first image is capable of being obtained from content of the at least two subimages, and a height of any one of the at least two subimages is less than the height of the first image.

2. The method according to claim 1, wherein the target display is connected to a second electronic device, and the method further comprises:
sending, by the first electronic device, a second image to the second electronic device, wherein the second image comprises the at least two subimages arranged side by side.

3. The method according to claim 1, wherein the first electronic device comprises the target display, and the method further comprises:
displaying, by the first electronic device, the at least two subimages side by side via the target display.

4. A projection method, comprising:
obtaining, by a first electronic device, a first image, wherein the first image is an image to be projected onto a target display for display, a width of the first image is less than a height of the first image, and the target display comprises at least two sub-displays; and
obtaining, by the first electronic device, at least two subimages based on the first image, wherein the at least two subimages are separately displayed on the at least two sub-displays, content of the first image is capable of being obtained from content of the at least two subimages, and a height of any one of the at least two subimages is less than the height of the first image.

5. The method according to claim 1 or 4, wherein the target display is connected to a second electronic device, and the method further comprises:
sending, by the first electronic device, the at least two subimages to the second electronic device.

6. The method according to claim 4, wherein the at least two subimages comprise a first subimage and a second subimage, the at least two sub-displays comprise a first sub-display and a second sub-display, the first electronic device comprises the first sub-display, and the first electronic device is connected to the second sub-display; and the method further comprises:
displaying, by the first electronic device, the first subimage via the first sub-display; and
outputting, by the first electronic device, the second subimage to the second sub-display for display.

7. The method according to claim 1, 2, 4, or 5, wherein the obtaining, by a first electronic device, a first image comprises:
capturing, by the first electronic device, screen content of the first electronic device to obtain the first image.

8. The method according to any one of claims 1 to 6, wherein the obtaining, by a first electronic device, a first image comprises: receiving, by the first electronic device, the first image from a third electronic device, wherein the first image is obtained by capturing screen content of the third electronic device.

9. The method according to any one of claims 1 to 8, wherein the at least two subimages comprise the first subimage and the second subimage.

10. The method according to claim 9, wherein if the first image comprises a first region and a second region, and a content type of the first region is different from a content type of the second region, the first subimage comprises the first region, and the second subimage comprises the second region.

11. The method according to claim 10, wherein the first subimage and the second subimage are obtained by segmenting the first image in a width direction of the first image, and a segmentation line for segmenting the first image is located at a border between the first region and the second region.

12. The method according to claim 9, wherein if the first image comprises a first region, a second region, and a third region, the second region is located between the first region and the third region, a ratio of an area of the second region to an area of the first image is greater than or equal to a preset threshold, and the second region is a non-text region, the first subimage comprises the first region and the third region, and the second subimage comprises the second region.

13. The method according to claim 9, wherein the first image comprises a text region, the first subimage comprises a first text sub-region in the text region, and the second subimage comprises a second text sub-region in the text region.

14. The method according to claim 13, wherein the first subimage and the second subimage are obtained by segmenting the first image in a width direction of the first image, and a segmentation line for segmenting the first image is located between two adjacent text lines in the text region.

15. The method according to any one of claims 9 to 14, wherein a height of the first subimage is the same as a height of the second subimage.

16. The method according to any one of claims 1 to 15, wherein the method further comprises:
obtaining, by the first electronic device, a content switching instruction, wherein the content switching instruction instructs switching content displayed on the target display;
obtaining, by the first electronic device, a third image in response to the content switching instruction, wherein a width of the third image is less than a height of the third image; and
obtaining, by the first electronic device, at least two subimages of the third image, wherein the at least two subimages of the third image are displayed on the target display, content of the third image is capable of being obtained from content of the at least two subimages of the third image, and a height of any one of the at least two subimages of the third image is less than the height of the third image.

17. A projection method, comprising:
obtaining, by a first electronic device, a first image, wherein the first image is an image to be projected onto a target display for display, a width of the first image is less than a height of the first image, content of the first image comprises a first text, and a width of the target display is greater than a height of the target display; and
obtaining, by the first electronic device based on the first image, a second text displayed on the target display, wherein text content of the second text is the same as text content of the first text, and a quantity of text lines in the second text is less than a quantity of text lines in the first text.

18. The method according to claim 17, wherein the content of the first image further comprises non-text content; and
the obtaining, by the first electronic device based on the first image, a second text displayed on the target display comprises:
obtaining, by the first electronic device, a second image based on the first image, wherein the second image comprises the second text and the non-text content, a width of the second image is greater than the width of the first image, and a height of the second image is less than the height of the first image.

19. An electronic device, comprising:
an obtaining module, configured to obtain a first image, wherein the first image is an image to be projected onto a target display for display, a width of the first image is less than a height of the first image, and a width of the target display is greater than a height of the target display; and
a processing module, configured to obtain at least two subimages based on the first image, wherein the at least two subimages are displayed side by side on the target display, content of the first image is capable of being obtained from content of the at least two subimages, and a height of any one of the at least two subimages is less than the height of the first image.

20. The electronic device according to claim 19, wherein the target display is connected to a second electronic device, and the electronic device further comprises:
a sending module, configured to send a second image to the second electronic device, wherein the second image comprises the at least two subimages arranged side by side.

21. The electronic device according to claim 19, wherein the electronic device comprises the target display; and
the processing module is configured to display the at least two subimages side by side via the target display.

22. An electronic device, comprising:
an obtaining module, configured to obtain a first image, wherein the first image is an image to be projected onto a target display for display, a width of the first image is less than a height of the first image, and the target display comprises at least two sub-displays; and
a processing module, configured to obtain at least two subimages based on the first image, wherein the at least two subimages are separately displayed on the at least two sub-displays, content of the first image is capable of being obtained from content of the at least two subimages, and a height of any one of the at least two subimages is less than the height of the first image.

23. The electronic device according to claim 22, wherein the at least two subimages comprise a first subimage and a second subimage, the at least two sub-displays comprise a first sub-display and a second sub-display, the electronic device comprises the first sub-display, and the electronic device is connected to the second sub-display; and the electronic device further comprises:
the processing module, configured to display the first subimage via the first sub-display; and
a sending module, configured to output the second subimage to the second sub-display for display.

24. The electronic device according to any one of claims 19 to 23, wherein the at least two subimages comprise the first subimage and the second subimage.

25. The electronic device according to claim 24, wherein if the first image comprises a first region and a second region, and a content type of the first region is different from a content type of the second region, the first subimage comprises the first region, and the second subimage comprises the second region.

26. The electronic device according to claim 25, wherein the first subimage and the second subimage are obtained by segmenting the first image in a width direction of the first image, and a segmentation line for segmenting the first image is located at a border between the first region and the second region.

27. The electronic device according to claim 24, wherein the first image comprises a text region, the first subimage comprises a first text sub-region in the text region, and the second subimage comprises a second text sub-region in the text region.

28. An electronic device, comprising:
an obtaining module, configured to obtain a first image, wherein the first image is an image to be projected onto a target display for display, a width of the first image is less than a height of the first image, content of the first image comprises a first text, and a width of the target display is greater than a height of the target display; and
a processing module, configured to obtain, based on the first image, a second text displayed on the target display, wherein text content of the second text is the same as text content of the first text, and a quantity of text lines in the second text is less than a quantity of text lines in the first text.

29. The electronic device according to claim 28, wherein the content of the first image further comprises non-text content; and
the processing module is configured to obtain a second image based on the first image, wherein the second image comprises the second text and the non-text content, a width of the second image is greater than the width of the first image, and a height of the second image is less than the height of the first image.

30. An electronic device, comprising a memory and a processor, wherein the memory stores code, the processor is configured to execute the code, and when the code is executed, the electronic device performs the method according to any one of claims 1 to 18.

31. A projection system, comprising the electronic device according to any one of claims 19 to 30 and a target display.

32. A computer storage medium, wherein the computer storage medium stores instructions, and when the instructions are executed on a computer, the computer is enabled to implement the method according to any one of claims 1 to 18.

33. A computer program product, wherein the computer program product stores instructions, and when the instructions are executed on a computer, the computer is enabled to implement the method according to any one of claims 1 to 18.
